# EUROPÄISCHE PATENTANMELDUNG

(11) **EP 3 747 915 A1**
(43) Veröffentlichungstag der Anmeldung: **09.12.2020**
(21) Anmeldenummer: 20182402.6
(22) Anmeldetag: 06.07.2011
(51) Int. Cl.: C08F 8/44, C08F 8/32, C08F 110/10, C10M 133/56, C10L 1/2383, C10L 10/14, C10L 10/18, C10M 133/16, C10L 1/224, C10N 30/00, C10N 30/02

(54) **VERWENDUNG EINER QUATERNISIERTE STICKSTOFFVERBINDUNG ALS OTTOKRAFTSTOFF-ADDITIVE**

(30) Priorität: 06.07.2010 EP 10168622; 12.05.2011 EP 11165920
(62) Teilanmeldung aus: 17198007.1
(71) Anmelder: BASF SE, 67056 Ludwigshafen am Rhein (DE)
(72) Erfinder: GRABARSE, Wolfgang, 68163 Mannheim (DE); BÖHNKE, Harald, 68167 Mannheim (DE); TOCK, Christian, 05865 Alzingen (LU); RÖGER-GÖPFERT, Cornelia, 69469 Weinheim (DE); VÖLKEL, Ludwig, 67117 Limburgerhof (DE)
(74) Vertreter: Reitstötter Kinzebach

(57) **Zusammenfassung**

Die vorliegende Erfindung betrifft neuartige säurefreie quaternisierte Stickstoffverbindungen, deren Herstellung und Verwendung als Krafts- und Schmierstoffadditiv, wie insbesondere als Detergensadditiv, als Wachs-Anti-Settling-Additiv (WASA) oder als Additiv zur Verringerung der inneren Dieselinjektorablagerungen (IDID); Additivpakete, welche diese Verbindungen enthalten; sowie damit additivierte Kraft- und Schmierstoffe. Weiterhin betrifft die vorliegende Erfindung die Verwendung dieser säurefreien quaternisierter Stickstoffverbindungen als Kraftstoffzusatz zur Verringerung oder Verhinderung von Ablagerungen in den Einspritzsystemen von direkteinspritzenden Dieselmotoren, insbesondere in Common-Rail-Einspritzsystemen, zur Verringerung des Kraftstoffverbrauches von direkteinspritzenden Dieselmotoren, insbesondere von Dieselmotoren mit Common-Rail-Einspritzsystemen, und zur Minimierung des Leistungsverlustes (powerloss) in direkteinspritzenden Dieselmotoren, insbesondere in Dieselmotoren mit Common-Rail-Einspritzsystemen.

## Beschreibung

Die vorliegende Erfindung betrifft neuartige säurefreie quaternisierte Stickstoffverbindungen, deren Herstellung und Verwendung als Kraft- und Schmierstoffadditiv, wie insbesondere als Detergensadditiv, als Wachs-Anti-Settling-Additiv (WASA) oder als Additiv zur Verringerung der internen Dieselinjektorablagerungen (IDID); Additivpakete, welche diese Verbindungen enthalten; sowie damit additivierte Kraft- und Schmierstoffe. Weiterhin betrifft die vorliegende Erfindung die Verwendung dieser säurefreien quaternisierten Stickstoffverbindungen als Kraftstoffzusatz zur Verringerung oder Verhinderung von Ablagerungen in den Einspritzsystemen von direkteinspritzenden Dieselmotoren, insbesondere in Common-Rail-Einspritzsystemen, zur Verringerung des Kraftstoffverbrauches von direkteinspritzenden Dieselmotoren, insbesondere von Dieselmotoren mit Common-Rail-Einspritzsystemen, und zur Minimierung des Leistungsverlustes (powerloss) in direkteinspritzenden Dieselmotoren, insbesondere in Dieselmotoren mit Common-Rail-Einspritzsystemen.

### Stand der Technik:

Bei direkteinspritzenden Dieselmotoren wird der Kraftstoff durch eine direkt in den Brennraum reichende Mehrloch-Einspritzdüse des Motors eingespritzt und feinst verteilt (vernebelt), anstatt wie beim klassischen (Kammer-)Dieselmotor in eine Vor- oder Wirbelkammer eingeführt zu werden. Der Vorteil der direkteinspritzenden Dieselmotoren liegt in ihrer für Dieselmotoren hohen Leistung und einem dennoch geringen Verbrauch. Außerdem erreichen diese Motoren ein sehr hohes Drehmoment schon bei niedrigen Drehzahlen.

Zur Zeit werden im Wesentlichen drei Verfahren eingesetzt, um den Kraftstoff direkt in den Brennraum des Dieselmotores einzuspritzen: die konventionelle Verteilereinspritzpumpe, das Pumpe-Düse-System (Unit-Injector-System bzw. Unit-Pump-System) und das Common-Rail-System.

Beim Common-Rail-System wird der Dieselkraftstoff von einer Pumpe mit Drücken bis zu 2000 bar in eine Hochdruckleitung, die Common-Rail gefördert. Ausgehend von der Common-Rail laufen Stichleitungen zu den verschiedenen Injektoren, die den Kraftstoff direkt in den Brennraum injizieren. Dabei liegt auf der Common-Rail stets der volle Druck an, was eine Mehrfacheinspritzung oder eine spezielle Einspritzform ermöglicht. Bei den anderen Injektionssystemen ist dagegen nur eine geringere Variation der Einspritzung möglich. Die Einspritzung beim Common-Rail wird im Wesentlichen in drei Gruppen unterteilt: (1.) Voreinspritzung, durch die im Wesentlichen eine weichere Verbrennung erreicht wird, so dass harte Verbrennungsgeräusche ("Nageln") vermindert werden und der Motorlauf ruhig erscheint; (2.) Haupteinspritzung, die insbesondere für einen guten Drehmomentverlauf verantwortlich ist; und (3.) Nacheinspritzung, die insbesondere für einen geringen NOₓ-Wert sorgt. Bei dieser Nacheinspritzung wird der Kraftstoff in der Regel nicht verbrannt, sondern durch Restwärme im Zylinder verdampft. Das dabei gebildete Abgas-/Kraftstoffgemisch wird zur Abgasanlage transportiert, wo der Kraftstoff in Gegenwart geeigneter Katalysatoren als Reduktionsmittel für die Stickoxide NOₓ wirkt.

Durch die variable, zylinderindividuelle Einspritzung kann beim Common-Rail-Einspritzsystem der Schadstoffausstoß des Motors, z.B. der Ausstoß von Stickoxiden (NOₓ), Kohlenmonoxid (CO) und insbesondere von Partikeln (Ruß), positiv beeinflusst werden. Dies ermöglicht beispielsweise, dass mit Common-Rail-Einspritzsystemen ausgerüstete Motoren der Euro 4-Norm theoretisch auch ohne zusätzlichen Partikelfilter genügen können.

In modernen Common-Rail-Dieselmotoren können sich unter bestimmten Bedingungen, beispielsweise bei Verwendung von biodieselhaltigen Kraftstoffen oder von Kraftstoffen mit Metall-Verunreinigungen wie Zink-Verbindungen, Kupfer-Verbindungen, Bleiverbindungen und weiteren Metallverbindungen , an den Injektoröffnungen Ablagerungen bilden, die das Einspritzverhalten des Kraftstoffs negativ beeinflussen und dadurch die Performance des Motors beeinträchtigen, d.h. insbesondere die Leistung verringern, aber zum Teil auch die Verbrennung verschlechtern. Die Bildung von Ablagerungen wird durch bauliche Weiterentwicklungen der Injektoren, insbesondere durch die Veränderung der Geometrie der Düsen (engere, konische Öffnungen mit abgerundetem Auslass) noch verstärkt. Für eine dauerhaft optimale Funktionsweise von Motor und Injektoren müssen solche Ablagerungen in den Düsenöffnungen durch geeignete Kraftstoffadditive verhindert oder reduziert werden.

Die WO 2006/135881 beschreibt quaternisierte Ammoniumsalze, hergestellt durch Kondensation eines Hydrocarbyl-substituierten Acylierungsmittels und einer Sauerstoff- oder Stickstoffatom-haltigen Verbindung mit tertiärer Aminogruppe, und anschließender Quaternisierung mittels Hydrocarbylepoxid in Kombination mit stöchiometrischen Mengen einer Säure, wie insbesondere Essigsäure. Stöchiometrische Mengen der Säure werden benötigt, um eine vollständige Ringöffnung des Epoxid-Quaternisierungsmittels und somit eine möglichst quantitative Quaternisierung zu gewährleisten. Bei der Umsetzung eines Dicarbonsäure-basierten Acylierungsmittels, wie dem in den dortigen Beispielen verwendeten PIBSA, mit einem Amin, wie Dimethylaminopropylamin (DMAPA) erfolgt unter Kondensationsbedingungen, d.h. Abspaltung von Wasser, die Bildung eines DMAPA-Succinimids, welches dann mit Epoxid und Säure in jeweils äquimolaren Mengen quaternisiert wird.

Als besonders nachteilig erweist sich bei Befolgung der technischen Lehre der WO 2006/135881 die Präsenz der stöchiometrischen Mengen an Säure, die zudem zum Ladungsausgleich für das dortige quaternisierte Imid-Detergens zwingend erforderlich ist. Um den Säureanteil des dortigen Imids zu verringern oder um Säure ganz zu entfernen wären zusätzliche Verfahrensmaßnahmen erforderlich, was die Herstellung des Produktes aufwändiger gestalten und damit deutlich verteuern würde. Das gemäß WO 2006/135881 hergestellte, Epoxid-quaternisierte Imid wird daher - ohne weitere Aufreinigung - in Form des Carbonsäuresalzes als Kraftstoffadditiv in den in der Anmeldung beschriebenen Tests eingesetzt.

Andererseits ist aber bekannt, dass Säuren in Kraftstoffadditiven Korrosionsprobleme hervorrufenkönnen (vgl. z.B. Sugiyama et al; SAE International, Technical Paper, Product Code: 2007-01-2027, Date Published: 2007-07-23). Das gemäß WO 2006/135881 bereitgestellte Epoxid-quaternisierte Additiv ist somit allein aufgrund des bestehenden erheblichen Korrosionsrisikos a priori mit signifikanten Anwendungsrisiken behaftet. Weiterhin weist das Produkt deutliche Nachteile hinsichtlich Motorenölverträglichkeit und Tieftemperatureigenschaften auf.

In den Einspritzsystemen modernen Dieselmotoren verursachen Ablagerungen signifikante Performance-Probleme. Weit verbreitet ist die Erkenntnis, dass derartige Ablagerungen in den Sprühkanälen zu einer Verringerung des Kraftstoffflusses und damit zu Leistungsverlusten (power loss) führen können. Ablagerungen an der Injektorspitze beeinträchtigen dagegen die optimale Ausbildung von Kraftstoff-Sprühnebel und bedingen dadurch eine verschlechterte Verbrennung und damit verbunden höhere Emissionen und vermehrten Kraftstoffverbrauch. Im Gegensatz zu diesen herkömmlichen, "äußeren" Ablagerungsphänomenen bereiten auch "interne" Ablagerungen (zusammengefasst als innere Diesel-Injektor-Ablagerungen (IDID)) in bestimmten Teilen der Injektoren, wie an der Düsennadel, am Steuerkolben, am Ventilkolben, am Ventilsitz, an der Ansteuereinheit und an den Führungen dieser Komponenten zunehmend Performance-Probleme. Herkömmliche Additive zeigen eine unzureichende Wirkung gegen diese IDIDs.

Es besteht daher die Aufgabe, verbesserte quaternisierte Kraftstoffadditive, insbesondere auf der Basis von Hydrocarbyl-substituierten Polycarbonsäureanhydriden, bereitzustellen, welche die genannten Nachteile des Standes der Technik nicht mehr aufweisen.

### Kurze Beschreibung der Erfindung:

Es wurde nun überraschenderweise gefunden, dass obige Aufgabe durch Bereitstellung eines säurefrei durchführbaren Additionsverfahrens zur Herstellung von Epoxidquaternisierten Stickstoff-haltigen Additiven auf der Basis von Hydrocarbyl-substituierten Polycarbonsäureanhydriden und damit reaktiven, quaternisierbare Aminogruppen aufweisenden Verbindungen, und durch die so zugänglichen säurefreien Reaktionsprodukte gelöst werden kann.

Überraschenderweise erlaubt die erfindungsgemäße Reaktionsführung den vollständigen Verzicht auf die Zugabe von freier Säure, insbesondere freier Protonensäure, welche gemäß Stand der Technik zwingend dem Quaternisierungsreagens Alkylenoxid zugesetzt werden muss. Durch die erfindungsgemäße Verfahrensführung wird nämlich durch Addition der stickstoffhaltigen quaternisierbaren Verbindung an das Hydrocarbyl-substituierte Polycarbonsäureanhydrid und Öffnung des Anhydridrings eine intramolekular gebundene Säurefunktion generiert, und man geht davon aus, ohne an diese Modellüberlegung gebunden zu sein, dass diese intramolekular generierte Carboxylgruppe das Alkylenoxid bei der Quaternisierungsreaktion aktiviert und durch Protonierung des nach der Addition des Alkylenoxides entstandenen, intermediären Alkoholates des Reaktionsprodukt in Form einer Betainstruktur bildet.

Überraschenderweise sind die so hergestellten erfindungsgemäßen Additive den in konventioneller Weise durch Epoxid/Säure-Quaternisierung hergestellten Additive gemäß Stand der Technik in mehrfacher Hinsicht überlegen.

### Figurenbeschreibung:

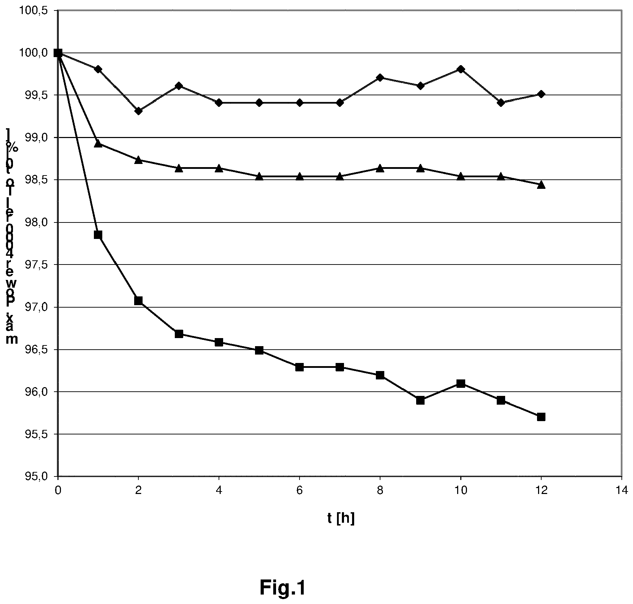

Figur 1 zeigt den Leistungsverlust verschiedener Dieselkraftstoffe in einem DW10-Motorentest. Insbesondere ist dies gezeigt für unadditivierter (Quadrate) bzw. einen erfindungsgemäß additivierten Kraftstoff (Rauten) verglichen mit einem Vergleichskraftstoff, versetzt mit Additiv gemäß Stand der Technik bei gleicher Dosierung (Dreiecke).

### Detaillierte Beschreibung der Erfindung:

### A1) Spezielle Ausführungsformen

Die vorliegende Erfindung betrifft insbesondere folgende spezielle Ausführungsformen:
1. Verfahren zur Herstellung quaternisierter Stickstoffverbindungen, wobei man
   a. an eine Polycarbonsäureanhydrid-Verbindung, insbesondere ein Polycarbonsäureanhydrid oder ein Hydrocarbyl-substituiertes Polycarbonsäureanhydrid, wie insbesondere ein Polyalkylen-substituiertes Polycarbonsäureanhydrid, eine Verbindung, enthaltend wenigstens eine, mit dem Anhydrid reaktive Sauerstoff- oder Stickstoff-haltige Gruppe, wie z.B. eine -OH und/oder eine primäre oder sekundäre Aminogruppe, und zusätzlich enthaltend wenigstens eine quaternisierbare Aminogruppe, addiert und
   b. das Produkt aus Stufe a) mit einem insbesondere H⁺-Donor-freien und vor allem säurefreien Quaternisierungsmittel quaternisiert.
2. Verfahren nach Ausführungsform 1, wobei die Polycarbonsäureanhydrid-Verbindung ein Di-, Tri- oder Tetracarbonsäure-Anhydrid ist.
3. Verfahren nach einer der vorhergehenden Ausführungsformen, wobei die Polycarbonsäureanhydrid-Verbindung das Anhydrid einer C₄-C₁₀-Dicarbonsäure ist.
4. Verfahren nach einer der vorhergehenden Ausführungsformen, wobei die Polycarbonsäureanhydrid-Verbindung wenigstens einen hochmolekularen Hydrocarbyl-, insbesondere Polyalkylen-Substituenten mit einem zahlenmittleren Molekulargewicht (Mn) im Bereich von etwa 200 bis 10.000, wie z.B. 300 bis 8.000, insbesondere 350 bis 5.000, umfasst.
5. Verfahren nach einer der vorhergehenden Ausführungsformen, wobei die mit dem Anhydrid reaktive Verbindung ausgewählt ist unter
   a. mit niedermolekularem Hydroxyhydrocarbyl, insbesondere niedermolekularem Hydroxyalkyl substituierten Mono- oder Polyaminen mit wenigstens einer quaternisierbaren, primären, sekundären oder tertiären Aminogruppe
   b. geradkettigen oder verzweigtem, cyclischen, heterocyclischen, aromatischen oder nichtaromatischen Polyaminen mit wenigstens einer primären oder sekundären (anhydridreaktiven) Aminogruppe und mit wenigstens einer quaternisierbaren, primären, sekundären oder tertiären Aminogruppe;
   c. Piperazinen.
6. Verfahren nach Ausführungsform 5, wobei die mit dem Anhydrid reaktive Verbindung ausgewählt ist unter
   a. mit niedermolekularem Hydroxyhydrocarbyl, insbesondere niedermolekularem Hydroxyalkyl substituierten primären, sekundären oder tertiären Monoaminen und Hydroxyalkyl-substituierten primären, sekundären oder tertiären Diaminen.
   b. geradkettigen oder verzweigten aliphatischen Diaminen mit zwei primären Aminogruppen; Di- oder Polyaminen mit wenigstens einer primären und wenigstens einer sekundären Aminogruppe; Di- oder Polyaminen mit wenigstens einer primären und wenigstens einer tertiären Aminogruppe; aromatischen carbocyclischen Diaminen mit zwei primären Aminogruppen; aromatischen heterocyclischen Polyaminen mit zwei primären Aminogruppen; aromatischen oder nichtaromatischen Heterozyklen mit einer primären und einer tertiären Aminogruppe.
7. Verfahren nach einer der vorhergehenden Ausführungsformen, wobei das Quaternisierungsmittel ausgewählt ist unter Epoxiden, insbesondere Hydrocarbyl-substituierten Epoxiden.
8. Verfahren nach Ausführungsform 7, wobei die Quaternisierung ohne Zugabe eines H⁺-Donors, insbesondere ohne Zugabe von Säure erfolgt.
9. Verfahren nach einer der vorhergehenden Ausführungsformen, wobei man Stufe a), d.h. die Additionsreaktion, bei einer Temperatur von weniger als etwa 80 °C und insbesondere bei einer Temperatur im Bereich von etwa 30 bis 70 °C, vor allem 40 bis 60 °C, durchführt.
10. Verfahren nach einer der vorhergehenden Ausführungsformen, wobei man Stufe a) über einem Zeitraum von 1 Minute bis 10 Stunden oder 10 Minuten bis 5 Stunden oder 10 Minuten bis 4 Stunden oder 2 bis 3 Stunden durchführt.
11. Verfahren nach einer der vorhergehenden Ausführungsformen, wobei man Stufe b), d.h. die die Quaternisierung, bei einer Temperatur im Bereich von 40 bis 80 °C durchführt.
12. Verfahren nach einer der vorhergehenden Ausführungsformen, wobei man Stufe b) über einen Zeitraum 1 bis 10 Stunden durchführt.
13. Verfahren nach einer der vorhergehenden Ausführungsformen, wobei man Stufe b) mit einem Epoxid, insbesondere niedermolekularen Hydrocarbylepoxid, als Quaternisierungsmittel in Abwesenheit von (stöchiometrischen Mengen) freier (von der Polycarbonsäureverbindung verschiedener) Säure durchführt.
14. Verfahren nach einer der vorhergehenden Ausführungsformen, wobei die Umsetzung gemäß Stufe a) und/oder b) in Abwesenheit eines Lösungsmittels, insbesondere in Abwesenheit eines organischen protischen Lösungsmittels erfolgt.
15. Quaternisierte Stickstoffverbindung oder Reaktionsprodukt, erhältlich nach einem Verfahren nach einer der vorhergehenden Ausführungsformen.
16. Quaternisierte Stickstoffverbindung oder Reaktionsprodukt nach Ausführungsform 15, umfassend wenigstens eine Verbindung der allgemeinen Formeln: 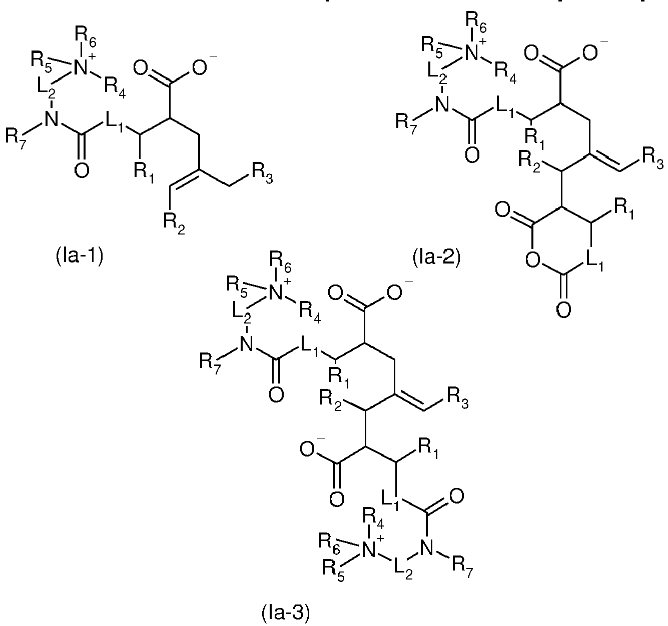 wie insbesondere la-1 ggf in Kombination mit la-2 und/oder la-3
   oder 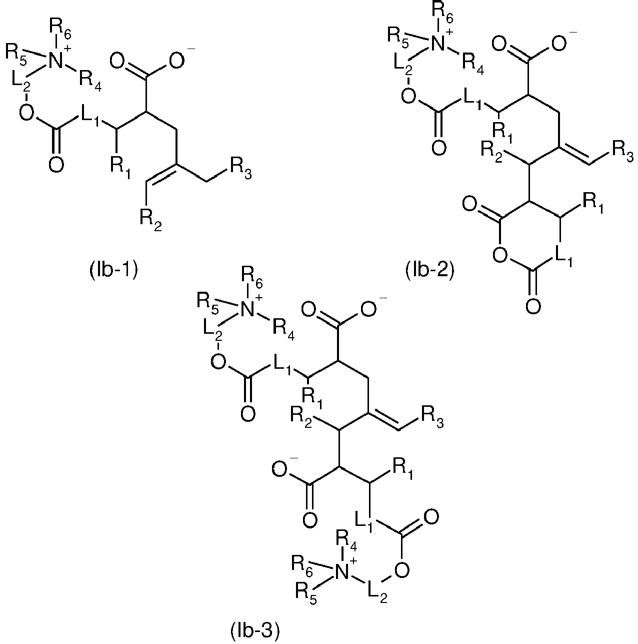 wie insbesondere Ib-1 ggf in Kombination mit Ib-2 und/oder Ib-3 worin
   R₁ für H oder geradkettigen oder verzweigten Hydrocarbyl-Rest steht, welcher gegebenenfalls ein- oder mehrfach substituiert sein kann mit Hydroxyl, Carboxyl, Hydrocarbyloxy-und/oder Acyl-Resten, oder ein oder mehrere Ethergruppen in der Hydrocarbylkette aufweist, und insbesondere für H oder kurzkettiges Hydrocarbyl, insbesondere Alkyl steht;
   R₂ für H oder Alkyl steht; R₃ für Hydrocarbyl, insbesondere langkettiges Hydrocarbyl, wie z.B. für einen Polyalkylenrest steht;
   wenigstens einer der Reste R₄, R₅ und R₆ ein durch Quaternisierung eingeführter Rest ist, insbesondere eine niedermolekularen Hydrocarbylrest oder niedermolekularen Hydroxyl-substituierter Hydrocarbylrest ist, und die übrigen Reste ausgewählt sind unter geradkettigen oder verzweigten niedermolekularen Hydrocarbylresten, zyklischen Hydrocarbylresten, welche gegebenenfalls eine oder mehrfach substituiert sind und/oder ein oder mehrere Heteroatome aufweisen;
   R₇ für H oder einen geradkettigen oder verzweigten niedermolekularen Hydrocarbyl-Rest steht, welcher gegebenenfalls ein oder mehrfach, wie z.B. 2-, 3- oder 4-fach, substituiert sein kann mit gleichen oder verschiedenen Hydroxyl-, Carboxyl-, niedermolekularen Hydrocarbyloxy- und/oder Acyl-Resten, oder ein oder mehrere Ethergruppen in der Hydrocarbylkette aufweist, oder R₇ zusammen mit einem der Reste R₄, R₅ und R₆ eine Brückengruppe, z.B. eine Alkylen- oder Alkenylen-Gruppe bildet;
   L₁ für eine chemische Bindung oder geradkettige oder verzweigte Alkylengruppe steht und
   L₂ für eine geradkettige oder verzweigte Alkylengruppe steht, die gegebenenfalls ein oder mehrere Heteroatome, insbesondere ausgewählt unter - O- und -NH- oder Substituenten trägt.
17. Quaternisierte Stickstoffverbindung oder Reaktionsprodukt nach Ausführungsform 15 oder 16, welche(s) im Wesentlichen H⁺-Donor-frei, insbesondere im Wesentlichen säurefrei ist, und insbesondere keine anorganischen Säuren oder kurzkettigen organischen Säuren aufweist.
18. Verwendung einer quaternisierten Stickstoffverbindung oder eines Reaktionsproduktes nach einer der Ausführungsformen 15 bis 17 als Kraftstoffadditiv oder Schmierstoffadditiv.
19. Verwendung nach Ausführungsform 18, als Detergensadditiv für Dieselkraftstoffe.
20. Verwendung nach Ausführungsform 18, als Wachs-Anti-Settling Additiv (WASA) für Mitteldestillatbrennstoffe, insbesondere Dieselkraftstoffe.
21. Verwendung nach Ausführungsform 19, als Additiv zur Verringerung oder Vermeidung von Ablagerungen in Einspritzsystemen von direkteinspritzenden Dieselmotoren, insbesondere in Common-Rail-Einspritzsystemen, zur Verringerung des Kraftstoffverbrauches von direkteinspritzenden Dieselmotoren, insbesondere von Dieselmotoren mit Common-Rail-Einspritzsystemen, und/oder zur Minimierung des Leistungsverlustes (powerloss) in direkteinspritzenden Dieselmotoren, insbesondere in Dieselmotoren mit Common-Rail-Einspritzsystemen.
22. Verwendung nach Ausführungsform 21, als Additiv zur Kontrolle (Vermeidung oder Verringerung, insbesondere teilweise, im wesentlichen vollständige oder vollständige Verringerung) vom internen Diesel-Injektor-Ablagerungen (IDID), dh. Ablagerungen im Inneren des Injektors; insbesondere von wachs- oder seifenarigen Ablagerungen und/oder kohlenstoffartigen polymeren Ablagerungen.
23. Additivkonzentrat, enthaltend in Kombination mit weiteren Kraftstoffadditiven, insbesondere Dieselkraftstoffadditiven, wenigstens eine quaternisierte Stickstoffverbindung oder ein Reaktionsprodukt nach einer der Ausführungsformen 15 und 16.
24. Kraftstoffzusammensetzung, enthaltend in einer Hauptmenge eines übliches Grundkraftstoffs eine (detergens-) wirksame Menge wenigstens einer quaternisierten Stickstoffverbindung oder eines Reaktionsproduktes nach einer der Ausführungsformen 15 und 16.
25. Schmierstoffzusammensetzung, enthaltend in einer Hauptmenge eines übliches Schmierstoffs eine (detergens-) wirksame Menge wenigstens einer quaternisierten Stickstoffverbindung oder eines Reaktionsproduktes nach einer der Ausführungsformen 15 und 16.

### A2) Allgemeine Definitionen

Ein "H⁺-Donor" oder "Protonendonor" bezeichnet jegliche chemische Verbindung, welche in der Lage ist, ein Proton an einen Protonen-Akzeptor abzugeben. Beispiele sind insbesondere Protonensäuren, aber auch Wasser.

"Säurefrei" bedeutet im Sinne der vorliegenden Erfindung das Fehlen von niedermolekularer anorganischer oder organischer Säure und/oder von deren korrespondierendem Anion und umfasst sowohl die fehlende Zugabe von Säure während des erfindungsgemäßen Herstellungsverfahrens also auch insbesondere das Fehlen von Säure und/oder von deren Anion in dem als Additiv verwendeten quaternisierten Reaktionsprodukt. Säurefreiheit umfasst insbesondere das Fehlen von stöchiometrischen Mengen solcher Säuren und deren Anionen (Stöchiometrie bezogen auf das eingesetzte Quaternisierungsmittel, wie insbesondere das Epoxid) und ist insbesondere gegeben, wenn, bezogen auf eingesetztes Epoxid-Quaternsierungsmittel, freie Säure oder deren Anion nur in substöchiometrischen Mengen vorliegt, wie z.B. in molaren Verhältnissen von weniger als 1 : 0,1, oder weniger als 1. 0,01 oder 1:0,001, oder 1:0,0001 von Quaternisierungsmittel zu Säure. Säurefreiheit umfasst insbesondere auch das vollständige Fehlen einer anorganischen oder organischen Protonensäure und/oder deren Anions (d.h. wenn Protonensäure und/oder deren Anion analytisch nicht mehr nachweisbar ist). Eine "Säure" in diesem Zusammenhang ist insbesondere eine freie Protonensäure.

Beispiele typischer "Protonensäuren" umfassen anorganische Säuren oder Mineralsäuren, wie HCl, H₂SO₄, HNO₃, H₂CO₃, und organische Carbonsäuren, wie insbesondere Monocarbonsäuren des Typs RCOOH, worin R für einen kurzkettigen Hydrocarbylrest steht

"Freie" oder "ungebundene" Säure bedeutet, dass die Säurefunktion nicht Bestandteil einer quaternisierten Verbindung selbst ist, also grundsätzlich von der Quaternisierten Verbindung, z.B. durch lonenaustausch, abtrennbar ist.

Typischen "Anionen" von Protonensäuren sind z.B. Carboxylatanionen, wie z.B. Acetat und Propionat.

"Quaternisierbare" Stickstoffgruppen oder Aminogruppen umfassen insbesondere primäre, sekundäre und tertiäre Aminogruppen.

Eine "Kondensation" oder "Kondensationsreaktion" im Sinne der vorliegenden Erfindung beschreibt die Umsetzung von zwei Molekülen unter Abspaltung eines kleineren Moleküls, insbesondere eines Wasser-Moleküls. Ist eine derartige Abspaltungnicht nachweisbar, insbesondere in stöchiometrischen Mengen nicht nachweisbar, und die beiden Moleküle reagieren trotzdem, z.B. unter Addition, so erfolgt die betreffende Umsetzung der beiden Moleküle "ohne Kondensation" .

Ein "Betain" bezeichnet eine spezielle Salzform einer chemischen Verbindung, die sowohl eine negative als auch eine positive Ladung in ein und demselben Molekül aufweist, wobei die Ladung durch intramolekularen lonentransfer jedoch nicht aufgehoben werden kann.

"IDID" steht für "Ablagerungen in Inneren von Einspritzdüsen" internen Einspritzdüsenablagerungen" wie sie bei modernen Dieselmotoren zu beobachten sind. Während herkömmliche (äußere) Ablagerungen koksartige Ablagerungen im Bereich der Nadelspitzen und der Sprühlöcher der Einspritzdüsen darstellen, treten zwischenzeitlich gehäuft Ablagerungen im Inneren der Einspritzdüsen auf und führen zu signifikanten Performance-Problemen, wie z.B. Blockierung der inneren beweglichen Teile des Ventils und damit verbunden verschlechterte oder fehlende Kontrolle der Kraftstoffinjektion, Kraftverlust und dergleichen. Die IDIDs treten sowohl in Form wachs- oder seifenartiger Ablagerungen (Fettsäurereste und/oder C₁₂- oder C₁₆-Alkyl-Bernsteinsäurereste analytisch nachweisbar) als auch in Form polymerartiger Kohlenstoff-Ablagerungen auf. Insbesondere letztere stellen besondere Anforderungen hinsichtlich ihrer Entfernung/Vermeidung.

Werden keine gegenteiligen Angaben gemacht, so gelten folgende allgemeine Bedeutungen:
"Hydrocarbyl" ist breit auszulegen und umfasst sowohl langkettige als auch kurzkettige, gerade oder verzweigte Kohlenwasserstoffreste, welche ggf. zusätzlich Heteroatome, wie z.B. O, N, NH,S, in ihrer Kette enthalten können.

"Zyklische Hydrocarbylreste" können aromatische oder nichtaromatischen Ringe umfassen und gegebenenfalls ein oder mehrere Ringheteroatome, ausgewählt unter O, S, N, NH aufweisen.

"Langkettige" hochmolekulare" Hydrocarbylreste haben ein zahlengemitteltes Molekulargewicht (Mₙ) von 85 bis 20.000, wie z.B. 113 bis 10.000, oder 200 bis 10.000 oder 350 bis 5.000, wie z.B. 350 bis 3.000, 500 bis 2.500, 700 bis 2.500, oder 800 bis 1.500. Sie sind insbesondere im Wesentlichen aus C₂₋₆-, insbesondere C₂₋₄-Monomerbausteinen, wie Ethylen, Propylen, n- oder iso-Butylen oder Mischungen davon aufgebaut, wobei die verschiedenen Monomere statistisch verteilt oder als Blöcke einpolymerisiert enthalten sein können. Derartige langkettige Hydrocarbylreste werden auch als Polyalkylenreste oder Poly-C₂₋₆- oder Poly-C₂₋₄-alkylenreste bezeichnet. Geeignete langkettige Hydrocarbylreste und deren Herstellung sind beispielsweise auch beschreiben in der WO2006/135881 und der dort zitierten Literatur.

Beispiele für besonders brauchbare Polyalkylen-Reste sind Polyisobutenyl-Reste, abgeleitet von sogenannten "hochreaktiven" Polyisobutenen, die sich durch einen hohen Gehalt an terminal angeordneten Doppelbindungen auszeichnen. Terminal angeordnete Doppelbindungen sind dabei alpha-olefinische Doppelbindungen des Typs 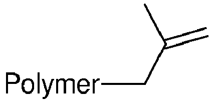 welche zusammen auch als Vinyliden-Doppelbindungen bezeichnet werden. Geeignete hochreaktive Polyisobutene sind beispielsweise Polyisobutene, die einen Anteil an Vinyliden-Doppelbindungen von größer 70 Mol-%, insbesondere größer 80 Mol-% oder größer 85 Mol-% aufweisen. Bevorzugt sind insbesondere Polyisobutene, die einheitliche Polymergerüste aufweisen. Einheitliche Polymergerüste weisen insbesondere solche Polyisobutene auf, die zu wenigstens 85 Gew.-%, vorzugsweise zu wenigstens 90 Gew.-% und besonders bevorzugt zu wenigstens 95 Gew.-% aus Isobuteneinheiten aufgebaut sind. Vorzugsweise weisen solche hochreaktiven Polyisobutene ein zahlenmittleres Molekulargewicht in dem oben genannten Bereich auf. Darüber hinaus können die hochreaktiven Polyisobutene eine Polydispersität im Bereich von 1,05 bis 7, insbesondere von etwa 1,1 bis 2,5, wie z.B. von kleiner 1,9 oder kleiner 1,5, aufweisen. Unter Polydispersität versteht man den Quotienten aus gewichtsmittlerem Molekulargewicht Mw geteilt durch das zahlenmittlere Molekulargewicht Mn.

Besonders geeignete hochreaktive Polyisobutene sind z.B. die Glissopal-Marken der BASF SE, insbesondere Glissopal 1000 (Mn = 1000), Glissopal V 33 (Mn = 550) und Glissopal 2300 (Mn = 2300) und deren Mischungen. Andere zahlenmittlere Molekulargewichte können nach im Prinzip bekannter Weise durch Mischen von Polyisobutenen unterschiedlicher zahlenmittlerer Molekulargewichte oder durch extraktive Anreicherung von Polyisobutenen bestimmter Molekulargewichtsbereiche eingestellt werden.

"Kurzkettiges Hydrocarbyl" niedermolekulares Hydrocarbyl" steht insbesondere für geradkettiges oder verzweigtes Alkyl oder Alkenyl, gegebenenfalls unterbrochen durch eine oder mehrere, wie z.B. 2, 3 oder 4 Heteroatomgruppen, wie -O- oder - NH-. oder gegebenenfalls ein- oder mehrfach, wie z.B. 2, 3 oder 4-fach substituiert.

"Kurzkettiges Hydrocarbyloxy" oder "niedermolekulares Hydrocarbyloxy" steht insbesondere für geradkettiges oder verzweigtes Alkyloxy oder Alkenyloxy, gegebenenfalls unterbrochen durch eine oder mehrere, wie z.B. 2, 3 oder 4 Heteroatomgruppen, wie -O- oder - NH- oder gegebenenfalls ein- oder mehrfach, wie z.B. 2, 3 oder 4-fach substituiert.

"Hydroxysubstituiertes Hydrocarbyl" oder "Hydroxyhydrocarbyl" steht insbesondere für die Hydroxy-substituierten Analoga der hierin definierten Alkyl- oder AlkenylReste.

"Alkyl" Niedrigalkyl" steht insbesondere für gesättigte, geradkettige oder verzweigte Kohlenwasserstoffreste mit 1 bis 4, 1 bis 6, 1 bis 8, oder 1 bis 10 oder 1 bis 20 Kohlenstoffatomen, wie z. B. Methyl, Ethyl, n-Propyl, 1-Methylethyl, n-Butyl, 1-Methyl-propyl, 2-Methylpropyl, 1,1-Dimethylethyl, n-Pentyl, 1-Methylbutyl, 2-Methylbutyl, 3-Methylbutyl, 2,2-Di-methylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl; sowie n-Heptyl, n-Octyl, n-Nonyl und n-Decyl, sowie die ein- oder mehrfach verzweigten Analoga davon.

"Hydroxyalkyl" steht insbesondere für die ein- oder mehrfach, insbesondere einfach hydroxylierten Analoga obiger Alkylreste, wie z.B. die monohydroxylierten Analoga obiger geradkettiger oder verzweigter Alkylreste, wie z.B. die linearen Hydroxyalkylgruppen mit primärer Hydroxylgruppe, wie Hydroxymethyl, 2-Hydroxyethyl, 3-Hydroxypropyl, 4-Hydroxybutyl.

"Alkenyl" steht für ein- oder mehrfach, insbesondere einfach ungesättigte, geradkettige oder verzweigte Kohlenwasserstoffreste mit 2 bis 4, 2 bis 6, 2 bis 8, 2 bis 10 oder 2 bis 20 Kohlenstoffatomen und einer Doppelbindung in einer beliebigen Position, z. B. C₂-C₆-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

"Hydroxyalkenyl" steht insbesondere für die ein- oder mehrfach, insbesondere einfach hydroxylierten Analoga obiger Alkenylreste

"Alkyloxy" und "Alkenyloxy" stehen insbesondere für die Sauerstoffverknüpften Analoga abiger "Alkyl" und "Alkeny" -Reste

"Alkylen" steht für geradkettige oder ein- oder mehrfach verzweigte Kohlenwasserstoff-Brückengruppen mit 1 bis 10 Kohlenstoffatomen, wie z.B. C₁-C₇-Alkylengruppen ausgewählt unter -CH₂-, -(CH₂)₂-, -(CH₂)₃-,-(CH₂)₄-, -(CH₂)₂-CH(CH₃)-, -CH₂-CH(CH₃)-CH₂- , (CH₂)₄-, -(CH₂)₅-, -(CH₂)₆, -(CH₂)₇-, -CH(CH₃)-CH₂-CH₂-CH(CH₃)- oder - CH(CH₃)-CH₂-CH₂-CH₂-CH(CH₃)- oder C₁-C₄-Alkylengruppen ausgewählt unter -CH₂-, -(CH₂)₂-, -(CH₂)₃-,-(CH₂)₄-, -(CH₂)₂-CH(CH₃)-, -CH₂-CH(CH₃)-CH₂-;
oder für C₂-C₆-Alkylengruppen, wie z.B.
-CH₂-CH(CH₃)-, -CH(CH₃)-CH₂-, -CH(CH₃)-CH(CH₃)-, -C(CH₃)₂-CH₂-, -CH₂-C(CH₃)₂-, -C(CH₃)₂-CH(CH₃)-, -CH(CH₃)-C(CH₃)₂-, -CH₂-CH(Et)-, -CH(CH₂CH₃)-CH₂-, -CH(CH₂CH₃)-CH(CH₂CH₃)-, -C(CH₂CH₃)₂-CH₂-, -CH₂-C(CH₂CH₃)₂-, -CH₂-CH(n-Propyl)-, -CH(n-Propyl)-CH₂-, -CH(n-Propyl)-CH(CH₃)-, -CH₂-CH(n-Butyl)-, -CH(n-Butyl)-CH₂-, -CH(CH₃)-CH(CH₂CH₃)-, -CH(CH₃)-CH(n-Propyl)-, -CH(CH₂CH₃)-CH(CH₃)-, -CH(CH₃)-CH(CH₂CH₃)-, oder für C₂-C₄-Alkylengruppen, wie z.B. ausgewählt unter -(CH₂)₂-, -CH₂-CH(CH₃)-, -CH(CH₃)-CH₂-, -CH(CH₃)-CH(CH₃)-, -C(CH₃)₂-CH₂-, -CH₂-C(CH₃)₂-, -CH₂-CH(CH₂CH₃)-, -CH(CH₂CH₃)-CH₂-,

"Alkenylen" steht für die ein- oder mehrfach, insbesondere einfach ungesättigten Analoga obiger Alkylengruppen mit 2 bis 10 Kohlenstoffatomen, insbesondere für C₂-C₇-Alkenylene oder C₂-C₄-Alkenylen, wie -CH=CH-, -CH=CH-CH₂-, - CH₂-CH=CH-, -CH=CH-CH₂-CH₂-, -CH₂-CH=CH-CH₂-, -CH₂-CH₂-CH=CH-, -CH(CH₃)-CH=CH-, -CH₂-C(CH₃)=CH-,

"Acyl" steht für Reste abgeleitet von geradkettigen oder verzweigten, gegebenenfalls ein- oder mehrfach ungesättigten, gegebenenfalls substituierten C₁-C₂₄-, insbesondere C₁-C₁₂- oder C₁-C₈-Monocarbonsäuren. Beispielsweise sind brauchbare Acylreste abgeleitet von folgenden Carbonsäuren: Gesättigten Säuren , wie Ameisen-, Essig-, Propion- und n- und i-Buttersäure, n- und i-Valeriansäure, Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure, Behensäure, Lignocerinsäure, Cerotinsäure und Melissinsäure; einfach ungesättigte Säuren, wie Acrylsäure, Crotonsäure, Palmitoleinsäure, Ölsäure und Erucasäure; und zweifach ungesättigten Säuren, wie Sorbinsäure und Linolsäure. Sind in den Fettsäuren Doppelbindungen enthalten, so können diese sowohl in cis- als auch in trans-Form vorliegen.

"Zyklische Hydrocarbylreste" umfassen insbesondere:
- Cycloalkyl: carbocyclische Reste mit 3 bis 20 Kohlenstoffatomen, wie z.B. C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl, Cycloheptyl, sowie Cyclopropyl-methyl, Cyclopropyl-ethyl, Cyclobutyl-methyl, Cyclobutyl-ethyl, Cyclopentyl-methyl, Cyclopentyl-ethyl, Cyclohexyl-methyl oder C₃-C₇-Cycloalkyl, wie Cyclopropyl, Cyclobutyl, Cyclopentyl, Cyclohexyl, Cycloheptyl, Cyclopropyl-methyl, Cyclopropyl-ethyl, Cyclobutyl-methyl, Cyclopentyl-ethyl, Cyclohexyl-methyl, wobei die Anbindung an den Rest des Moleküls über jegliches geeignetes C-Atom erfolgen kann.
- Cycloalkenyl: monocyclische, einfach ungesättigte Kohlenwasserstoffgruppen mit 5 bis 8, vorzugsweise bis 6 Kohlenstoffringgliedern, wie Cyclopenten-1-yl, Cyclopenten-3-yl, Cyclohexen-1-yl, Cyclohexen-3-yl und Cyclohexen-4-yl;
- Aryl: ein- oder mehrkernige, vorzugsweise ein- oder zweikernige, gegebenenfalls substituierte aromatische Reste mit 6 bis 20 wie z.B. 6 bis 10 Ring-Kohlenstoffatomen, wie z.B. Phenyl, Biphenyl, Naphthyl wie 1- oder 2-Naphthyl, Tetrahydronaphthyl, Fluorenyl, Indenyl und Phenanthrenyl. Diese Arylreste können gegebenenfalls 1, 2, 3, 4, 5 oder 6 gleiche oder verschiedene Substituenten tragen.
- Arylalkyl: die Aryl-substituierten Analoga obiger Alkylreste, wobei Aryl ebenfalls die oben angegebenen Bedeutungen besitzt, wie z.B. Phenyl-C₁-C₄-Alkylreste ausgewählt unter Phenyl-methyl oder Phenyl-ethyl.
- Heterocyclyl: fünf- bis siebengliedrige gesättigte, partiell ungesättigte oder aromatische(= Heteroaryl bzw. Hetaryl) Heterocyclen bzw. Heterocyclylreste, enthaltend ein, zwei , drei oder vier Heteroatome aus der Gruppe O, N oder S. Beispielsweise können folgende Untergruppen genannt werden
   - 5- oder 6-gliedriges gesättigtes oder einfach ungesättigtes Heterocyclyl, enthaltend ein bis zwei Stickstoffatome und/oder ein Sauerstoff- oder Schwefelatom oder ein oder zwei Sauerstoff- und/oder Schwefelatome als Ringglieder, z. B. 2-Tetrahydrofuranyl, 3-Tetrahydrofuranyl, 2-Tetrahydrothienyl, 3-Tetrahydrothienyl, 1-Pyrrolidinyl, 2-Pyrrolidinyl, 3-Pyrrolidinyl, 3-Isoxazolidinyl, 4-Isoxazolidinyl, 5-Isoxazolidinyl, 3-Isothiazolidinyl, 4-Isothiazolidinyl, 5-Isothiazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Thiazolidinyl, 4-Thiazolidinyl, 5-Thiazolidinyl, 2-Imidazolidinyl, 4-Imidazolidinyl, 2-Pyrrolin-2-yl, 2-Pyrrolin-3-yl, 3-Pyrrolin-2-yl, 3-Pyrrolin-3-yl, 1-Piperidinyl, 2-Piperidinyl, 3-Piperidinyl, 4-Piperidinyl, 1,3-Dioxan-5-yl, 2-Tetrahydropyranyl, 4-Tetrahydropyranyl, 2-Tetrahydrothienyl, 3-Hexahydropyridazinyl, 4-Hexahydropyridazinyl, 2-Hexahydropyrimidinyl, 4-Hexahydropyrimidinyl, 5-Hexahydropyrimidinyl und 2-Piperazinyl;
   - 5-gliedriges aromatisches Heterocyclyl, enthaltend neben Kohlenstoffatomen ein, zwei oder drei Stickstoffatome oder ein oder zwei Stickstoffatome und ein Schwefel- oder Sauerstoffatom als Ringglieder, z. B. 2-Furyl, 3-Furyl, 2-Thienyl, 3-Thienyl, 2-Pyrrolyl, 3-Pyrrolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, und 1,3,4-Triazol-2-yl;
   - 5-gliedriges aromatisches Heterocyclyl, das 1, 2, 3 oder 4 Stickstoffatome als Ringglieder aufweist, wie 1-, 2- oder 3-Pyrrolyl, 1-, 3- oder 4-Pyrazolyl, 1-, 2- oder 4-Imidazolyl, 1,2,3-[1H]-Triazol-1-yl, 1,2,3-[2H]-Triazol-2-yl, 1,2,3-[1H]-Triazol-4-yl, 1,2,3-[1H]-Triazol-5-yl, 1,2,3-[2H]-Triazol-4-yl, 1,2,4-[1H]-Triazol-1-yl, 1,2,4-[1H]-Triazol-3-yl, 1,2,4-[1H]-Triazol-5-yl, 1,2,4-[4H]-Triazol-4-yl, 1,2,4-[4H]-Triazol-3-yl, [1H]-Tetrazol-1-yl, [1H]-Tetrazol-5-yl, [2H]-Tetrazol-2-yl und [2H]-Tetrazol-5-yl;
   - 5-gliedriges aromatisches Heterocyclyl, das 1 unter Sauerstoff und Schwefel ausgewähltes Heteroatome und gegebenenfalls 1, 2 oder 3 Stickstoffatome als Ringglieder aufweist, beispielsweise 2-Furyl, 3-Furyl, 2-Thienyl, 3-Thienyl, 3- oder 4-Isoxazolyl, 3- oder 4- Isothiazolyl, 2-, 4- oder 5-Oxazolyl, 2-, 4 oder 5-Thiazolyl, 1,2,4-Thiadiazol-3-yl, 1,2,4-Thiadiazol-5-yl, 1,3,4-Thiadiazol-2-yl, 1,2,4-Oxadiazol-3-yl, 1,2,4-Oxadiazol-5-yl und 1,3,4-Oxadiazol-2-yl;
   - 6-gliedriges Heterocyclyl, enthaltend neben Kohlenstoffatomen ein oder zwei bzw. ein, zwei oder drei Stickstoffatome als Ringglieder, z. B. 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,2,4-Triazin-3-yl; 1,2,4-Triazin-5-yl, 1,2,4-Triazin-6-yl und 1,3,5-Triazin-2-yl;

"Substituenten" für hierin angegebene Reste, sind insbesondere ausgewählt sind unter Ketogruppen, - COOH, -COO-Alkyl, - OH, -SH, -CN, Amino, -NO₂, Alkyl, oder Alkenylgruppen.

### A3) Polycarbonsäureanhydrid-Verbindungen, wie insbesondere Polycarbonsäureanhydride und Hydrocarbyl-substituierte Polycarbonsäureanhydride:

Das eingesetzte Anhydrid ist von beliebigen, aliphatischen zwei- oder mehrwertigen (wie z.B. 3- oder- 4 wertig), insbesondere von Di-, Tri- oder Tetracarbonsäuren abgeleitet, und gegebenenfalls durch einen oder mehrere (wie z.B. 2 oder 3), insbesondere einem langkettigen Alkylrest und/oder einem hochmolekularen Hydrocarbylrest, insbesondere einem Polyalkylenrest substituiert. Beispiele sind Anhydride von C₃ - C₁₀ Polycarbonsäuren, wie die Dicarbonsäuren Malonsäure, Bernsteinsäure, Glutarsäure, Adipinsäure, Pimelinsäure, Suberinsäure, Azelainsäure und Sebacinsäure, und deren verzweigte Analoga; sowie die Tricarbonsäure Citronensäure. Die Anhydride können auch aus den entsprechenden einfach ungesättigten Säuren und Addition wenigstens eines langkettigen Alkylrests und/oder hochmolekularen Hydrocarbylrests erzeugt werden. Beispiele geeigneter einfach ungesättigter Säuren sind Fumarsäure, Maleinsäure, Itaconsäure.

Der hydrophobe "langkettige" oder "hochmolekulare" Hydrocarbylrest, welcher für die ausreichende Löslichkeit des quaternisierten Produkts im Kraftstoff sorgt, hat ein zahlengemitteltes Molekulargewicht (Mₙ) von 85 bis 20.000, wie z.B. 113 bis 10.000, oder 200 bis 10.000 oder 350 bis 5.000, wie z.B. 350 bis 3.000, 500 bis 2.500, 700 bis 2.500, oder 800 bis 1.500. Als typische hydrophobe Hydrocarbylreste sind zu nennen Polypropenyl-, Polybutenyl- und Polyisobutenylreste, z.B. mit einem zahlenmittleren Molekulargewicht Mₙ von 3.500 bis 5.000, 350 bis 3.000, 500 bis 2.500, 700 bis 2.500 und 800 bis 1.500.

Geeignete Hydrocarbyl substituierte Anhydride sind z.B. beschrieben in der DE 43 19 672 und der WO2008/138836.

Geeignete Hydrocarbyl-substituierte Polycarbonsäureanhydride umfassen auch polymere, insbesondere dimere Formen solcher Hydrocarbyl-substituierten Polycarbonsäureanhydride. Dimere Formen enthalten insbesondere zwei Säureanhydridgruppen welche unabhängig voneinander im erfindungsgemäßen Herstellungsverfahren mit der quaternisierbaren Stickstoffverbindung umgesetzt werden können.

### A4) Quatemisierungsmittel:

Als Quaternisierungsmittel kommen im Prinzip alle als solche geeigneten Verbindungen in Betracht. In einer besonderen Ausführungsform erfolgt die Quaternisierung des mindestens einen quaternisierbaren tertiären Stickstoffatoms jedoch mit mindestens einem Quaternisierungsmittel ausgewählt aus Epoxiden, insbesondere Hydrocarbyl-Epoxiden. 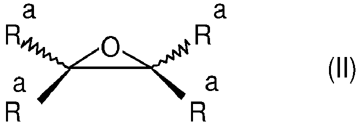 wobei die darin enthaltenen R^{a} Reste gleich oder verschieden sind und für H oder für einen Hydrocarbylrest stehen, wobei der Hydrocarbylrest wenigstens 1 bis 10 Kohlenstoffatome aufweist. Insbesondere sind dies aliphatische oder aromatische Reste, wie z.B. lineare oder verzweigte C₁₋₁₀-Alkylreste oder aromatische Reste, wie Phenyl oder C₁₋₄-Alkylphenyl.

Als Hydrocarbyl-Epoxide eignen sich beispielsweise aliphatische und aromatische Alkylenoxide, wie insbesondere C₂₋₁₂-Alkylenoxide, wie Ethylenoxid, Propylenoxid, 1,2-Butylenoxid, 2,3-Butylenoxid, 2-Methyl-1,2-propenoxid (Isobutenoxid), 1,2-Pentenoxid, 2,3-Pentenoxid, 2-Methyl-1,2-butenoxid, 3-Methyl-1,2-butenoxid, 1,2-Hexenoxid, 2,3-Hexenoxid, 3,4-Hexenoxid, 2-Methyl-1,2-pentenoxid, 2-Ethyl-1,2-butenoxid, 3-Methyl-1,2-pentenoxid, 1,2-Decenoxid, 1,2-Dodecenoxid oder 4-Methyl-1,2-pentenoxid; sowie aromatensubstituierte Ethylenoxide, wie gegebenenfalls substituiertes Styroloxid, insbesondere Styroloxid oder 4-Methyl-styroloxid.

Im Falle der Verwendung von Epoxiden als Quaternisierungsmittel werden diese insbesondere in Abwesenheit von freien Säuren, insbesondere in Abwesenheit von freien Protonensäuren, wie vor allem von C₁₋₁₂-Monocarbonsäuren, wie Ameisensäure, Essigsäure oder Propionsäure oder C₂₋₁₂-Dicarbonsäuren wie Oxalsäure oder Adipinsäure; oder auch in Abwesenheit von Sulfonsäuren, wie Benzolsulfonsäure oder Toluolsulfonsäure oder wässrigen Mineralsäuren, wie Schwefelsäure oder Salzsäure, eingesetzt. Das so hergestellte Quaternisierungsprodukt ist damit "säurefrei" im Sinne der vorliegenden Erfindung.

### A5) Quartemisierte oder Quatemisierbare Stickstoff-Verbindungen:

Die mit dem Anhydrid reaktive, quaternisierbare Stickstoff-Verbindung ist ausgewählt unter
a. Hydroxyalkyl-substituierten Mono- oder Polyaminen mit wenigstens einer quarternisierten (z.B. Cholin) oder quaternisierbaren, primären, sekundären oder tertiären Aminogruppe,
b. geradkettigen oder verzweigtem, cyclischen, heterocyclischen, aromatischen oder nichtaromatischen Polyaminen mit wenigstens einer primären oder sekundären (anhydridreaktiven) Aminogruppe und mit wenigstens einer quarternisierten oder quaternisierbaren, primären, sekundären oder tertiären Aminogruppe;
c. Piperazinen.

Insbesondere ausgewählt sind die quaternisierbaren Stickstoff-Verbindung unter
a. Hydroxyalkyl-substituierten primären, sekundären, tertiären oder quartären Monoaminen und Hydroxyalkyl-substituierten primären, sekundären, tertiären oder quartären Diaminen.
b. geradkettigen oder verzweigten aliphatischen Diaminen mit zwei primären Aminogruppen; Di- oder Polyaminen mit wenigstens einer primären und wenigstens einer sekundären Aminogruppe; Di- oder Polyaminen mit wenigstens einer primären und wenigstens einer tertiären Aminogruppe; Di- oder Polyaminen mit wenigstens einer primären und wenigstens einer quartären Aminogruppe; aromatischen carbo-cyclischen Diaminen mit zwei primären Aminogruppen; aromatischen heterocyclischen Polyaminen mit zwei primären Aminogruppen; aromatischen oder nichtaromatischen Heterozyklen mit einer primären und einer tertiären Aminogruppe;

Beispiele für geeignete "hydroxyalkyl-substituierte Mono- oder Polyamine" sind solche die mit wenigstens einem, wie z.B. 1, 2, 3, 4, 5 oder 6, Hydroxyalkyl-Substituenten ausgestattet sind.

Ala Beispiele für "Hydroxyalkyl-substituierte Monoamine" können genannt werden: N-Hydroxyalkyl-monoamine, N,N-Dihydroxyalkyl-monoamine und N,N,N-Trihydroxyalkyl-monoamine, wobei die Hydroxyalkylgruppen gleich oder verschieden sind und außerdem wie oben definiert sind. Hydroxyalkyl steht dabei insbesondere für 2-Hydroxyethyl, 3-Hydroxypropyl oder 4-Hydroxybutyl.

Beispielsweise können folgende "Hydroxyalkyl-substituierte Polyamine" und insbesondere "Hydroxyalkyl-substituierte Diamine" genannt werden: (N-Hydroxyalkyl)-alkylendiamine, N,N-Dihydroxyalkyl-alkylendiamine, wobei die Hydroxyalkylgruppen gleich oder verschieden sind und außerdem wie oben definiert sind. Hydroxyalkyl steht dabei insbesondere für 2-Hydroxyethyl, 3-Hydroxypropyl oder 4-Hydroxybutyl; Alkylen steht dabei insbesondere für Ethylen, Propylen oder Butylen.

Geeignete "Diamine" sind Alkylendiamine, sowie die N-alkylsubstituierten Analoga davon, wie N-monoalkylierten Alkylendiamine und die N,N- oder N, N' -dialkylierten Alkylendiamine. Alkylen steht insbesondere für geradkettiges oder verzweigtes C₁₋₇ oder C₁₋₄-Alkylen, wie oben definiert. Alkyl steht insbesondere für C₁₋₄-Alkyl gemäß obiger Definition. Beispiele sind insbesondere Ethylendiamin, 1,2-Propylendiamin, 1,3-Propylendiamin, 1,4-Butylendiamin und Isomere davon, Pentandiamin und Isomere davon, Hexandiamin und Isomere davon, Heptandiamin und Isomere davon, sowie ein- oder mehrfach, wie z.B. ein- oder zweifach C₁-C₄-alkylierte, wie z.B. methylierte, Derivate der vorher genannten Diamin-Verbindungen, wie z.B. 3-Dimethylamino-1-propylamin (DMAPA), N,N-Diethylaminopropylamin, und N,N-Dimethylaminoethylamin.

Geeignete geradkettige "Polyamine" sind beispielsweise Dialkylentriamin, Trialkylentetramin, Tetraalkylenpentamin, Pentaalkylenhexamin, sowie die N-alkylsubstituierten Analoga davon, wie N-monoalkylierten und die N,N- oder N, N' - dialkylierten Alkylenpolyamine. Alkylen steht insbesondere für geradkettiges oder verzweigtes C₁₋₇ oder C₁₋₄-Alkylen, wie oben definiert. Alkyl steht insbesondere für C₁₋₄-Alkyl gemäß obiger Definition.

Beispiele sind insbesondere Diethylentriamin, Triethylentetramin, Tetraethylenpentamin, Pentaethylenhexamin, Dipropylentriamin, Tripropylenetetramin, Tetrapropylenpentamin, Pentapropylenhexamin, Dibutylentriamin, Tributylentetramin, Tetrabutylenpentamin, Pentabutylenhexamin; sowie die N,N-Dialkylderivate davon, insbesondere die N,N-Di-C₁₋₄-alkylderivate davon. Als Beispiele können genannt werden: N,N-Dimethyldimethylentriamin, N,N-Diethyldimethylentriamin, N,N-Dipropyldimethylentriamin, N,N-Dimethyldiethylen-1,2-triamin, N,N-Diethyldiethylen-1,2-triamin, N,N-Dipropyldiethylen-1,2-triamin, N,N-Dimethyldipropylen-1,3-triamin (i.e. DMAPAPA), N,N-Diethyldipropylen-1,3-triamin, N,N-Dipropyldipropylen-1,3-triamin, N,N-Dimethyldibutylen-1,4-triamin, N,N-Diethyldibutylen-1,4-triamin, N,N-Dipropyldibutylen-1,4-triamin, N,N-Dimethyldipentylen-1,5-triamin, N,N-Diethyldipentylen-1,5-triamin, N,N-Dipropyldipentylen-1,5-triamin, N,N-Dimethyldihexylen-1,6-triamin, N,N-Diethyldihexylen-1,6-triamin und N,N-Dipropyldihexylen-1,6-triamin,

"Aromatische carbocyclischen Diamine" mit zwei primären Aminogruppen sind die di-aminosubstituierten Derivate von Benzol, Biphenyl, Naphthalin, Tetrahydronaphthalin, Fluoren, Inden und Phenanthren.

"Aromatische oder nicht-aromatische heterocyclische Polyamine" mit zwei primären Aminogruppen sind die mit zwei Aminogruppen substituierten Derivate von folgenden Heterocyclen:;
- 5- oder 6-gliedriges gesättigtes oder einfach ungesättigtes Heterocyclen, enthaltend ein bis zwei Stickstoffatome und/oder ein Sauerstoff- oder Schwefelatom oder ein oder zwei Sauerstoff- und/oder Schwefelatome als Ringglieder, z. B. Tetrahydrofuran, Pyrrolidin, Isoxazolidin, Isothiazolidin, Pyrazolidin, Oxazolidin, Thiazolidin, Imidazolidin, Pyrrolin, Piperidin, Piperidinyl, 1,3-Dioxan, Tetrahydropyran, Hexahydropyridazin, Hexahydropyrimidin, Piperazin;
- 5-gliedrige aromatische Heterocyclen, enthaltend neben Kohlenstoffatomen ein, zwei oder drei Stickstoffatome oder ein oder zwei Stickstoffatome und ein Schwefel- oder Sauerstoffatom als Ringglieder, z. B. Furan, Thian, Pyrrol, Pyrazol, Oxazol, Thiazol, Imidazol und 1,3,4-Triazol; Isoxazol, Isothiazol, Thiadiazol, Oxadiazol
- 6-gliedrige Heterocyclen enthaltend neben Kohlenstoffatomen ein oder zwei bzw. ein, zwei oder drei Stickstoffatome als Ringglieder, z. B. Pyridinyl,Pyridazin, Pyrimidin, Pyrazinyl, 1,2,4-Triazin , 1,3,5-Triazin-2-yl;

"Aromatische oder nichtaromatische Heterozyklen mit einer primären und einer tertiären Aminogruppe" sind beispielsweise die oben genannten N-Heterocyclen, welche an wenigstens einem Ring-N-Atom aminoalkyliert sind, und insbesondere eine Amino-C₁₋₄-alkylgruppe tragen.

"Aromatischen oder nichtaromatischen Heterozyklen mit einer tertiären Aminogruppe und einer Hydroxyalkylgruppe" sind beispielsweise die oben genannten N-Heterocyclen, welche an wenigstens einem Ring-N-Atom hydroxyalkyliert sind, und insbesondere eine Hydroxy-C₁₋₄-alkylgruppe tragen.

Folgende Gruppen einzelner Verbindungsklassen quaternisierbarer Stickstoffverbindungen seien insbesondere genannt:

**Gruppe 1:**

| **NAME** | **FORMEL** |
|---|---|
| ***Diamine mit primärem zweiten N-Atom*** | |
| Ethylendiamin | 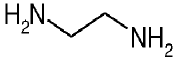 |
| 1,2-Propylendiamin | 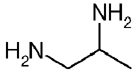 |
| 1,3-Propylendiamin | 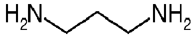 |
| Isomere Butylendiamine, wie z.B. | 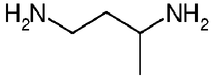 |
| 1,5-Pentylendiamin | 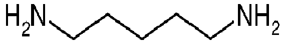 |
| Isomere Pentandiamine, wie z.B. | 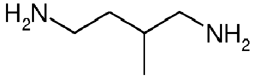 |
| Isomere Hexandiamine, wie z.B. | 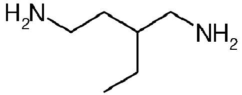 |
| Isomere Heptandiamine, wie z.B. | 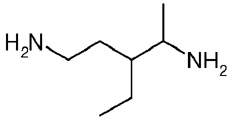 |

| ***Di- und Polyamine mit sekundärem zweiten N-Atom*** | |
|---|---|
| Diethylentriamin (DETA) | 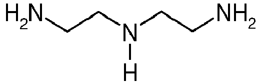 |
| Dipropylentriamin (DPTA), 3,3'-Iminobis(N,N-dimethylpropylamin) | 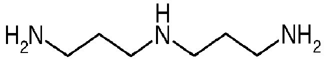 |
| Triethylentetramin (TETA) | 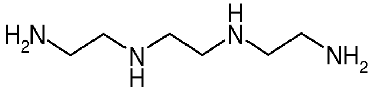 |
| Tetraethylenpentamin (TEPA) | 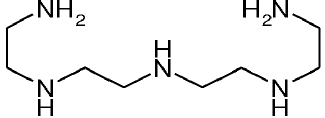 |
| Pentaethylenhexamin | 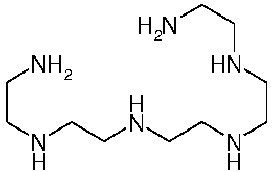 |
| N-Methyl-3-amino-1-propylamin | 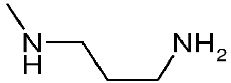 |
| Bishexamethylentriamin | 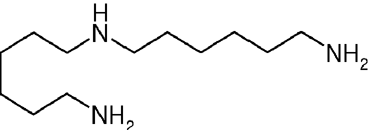 |

| ***Aromaten*** | |
|---|---|
| Diaminobenzole, wie z.B. | 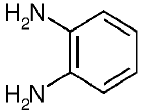 |
| Diaminopyridine, wie z.B. | 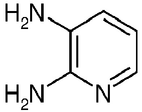 |

**Gruppe 2:**

| **NAME** | **FORMEL** |
|---|---|
| ***Heterozyklen*** | |
| 1-(3-Aminopropyl)imidazol | 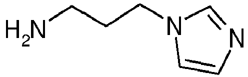 |
| 4-(3-Aminopropyl)-morpholin | 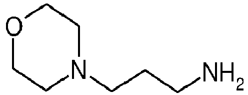 |
| 1-(2-Aminoethylpiperidin) | 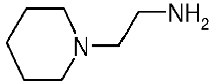 |
| 2-(1-Piperazinyl)ethylamin (AEP) | 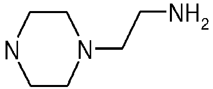 |
| N-Methylpiperazin | 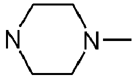 |

| ***Amine mit tertiärem zweiten N-Atom*** | |
|---|---|
| 3,3-Diamino-N-methyldipropylamin | 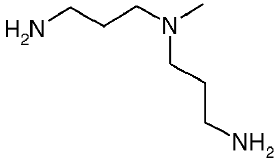 |
| 3-Dimethylamino-1-propylamin (DMAPA) | 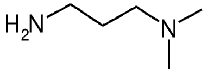 |
| N,N-Diethylaminopropylamin | 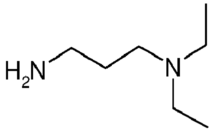 |
| N,N-Dimethylaminoethylamin | 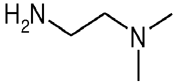 |

**Gruppe 3:**

| **NAME** | **FORMEL** |
|---|---|
| ***Alkohole mit primärem und sekundärem Amin*** | |
| Ethanolamin | 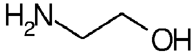 |
| 3-Hydroxy-1-propylamin | 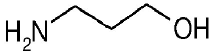 |
| Diethanolamin | 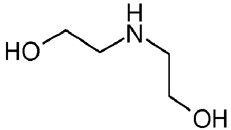 |
| Diisopropanolamin | 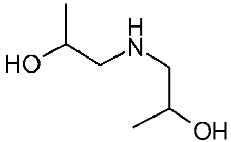 |
| N-(2-Hydroxyethyl)ethylendiamin | 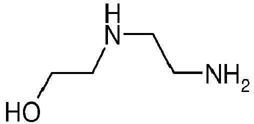 |

| ***Alkohole mit tertiärem Amin*** | |
|---|---|
| Triethanolamin, (2,2^{I},2^{II}-Nitrilotriethanol) | 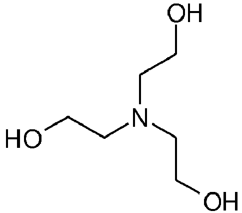 |
| 1-(3-Hydroxypropyl)imidazol | 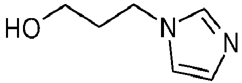 |
| Tris(hydroxymethyl)amin | 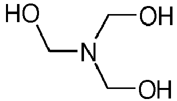 |
| 3-Dimethylamino-1-propanol | 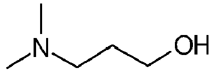 |
| 3-Diethylamino-1-propanol | 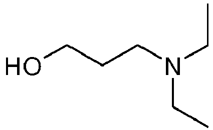 |
| 2-Dimethylamino-1-ethanol | 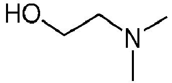 |
| 4-Diethylamino-1-butanol | 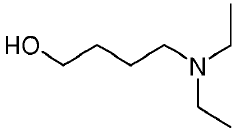 |

### A6) Herstellung erfindungsgemäßer Additive:

### a) Amin-Addition und Alkohol-Addition

Die Umsetzung der Hydrocarbyl-substituierten Polycarbonsäureanhydrid-Verbindung mit der quaternisierbaren Stickstoffverbindung erfolgt unter thermisch kontrollierten Bedingungen, so dass im Wesentlichen keine Kondensationsreaktion erfolgt. Insbesondere ist erfindungsgemäß keine Bildung von Reaktionswasser zu beobachten. Insbesondere erfolgt die Reaktion bei einer Temperatur im Bereich von 10 bis 80, insbesondere 20 bis 60 oder 30 bis 50 °C. Die Reaktionsdauer kann dabei im Bereich von wenigen Minuten oder einigen Stunden, wie z.B. etwa 1 Minute bis zu etwa 10 Stunden liegen. Der Umsetzung kann dabei bei etwa 0,1 bis 2 atm Druck, insbesondere aber etwa bei Normaldruck erfolgen. Insbesondere ist eine Inertgas-Atmosphäre, wie z.B. Stickstoff, zweckmäßig.

Die Reaktanden werden insbesondere in etwa äquimolaren Mengen vorgelegt, gegebenenfalls ist ein geringer, z. B. 0,05 bis 0,5-facher, wie z.B. 0,1 bis 0,3 facher, molarer Überschuss des Anhydrids wünschenswert. Falls erforderlich können die Reaktanden in einem geeigneten inerten organischen aliphatischen oder aromatischen Lösungsmittel oder einem Gemisch davon, vorgelegt werden. Typischen Beispiele sind z.B. Lösungsmittel der Solvesso Serie, Toluol oder Xylol. Gemäß einer weiteren besonderen Ausführungsform wird die Umsetzung aber in Abwesenheit von organischen Lösungsmittel, insbesondere protischen Lösungsmitteln, durchgeführt.

Bei erfindungsgemäßer Durchführung der Umsetzung erfolgt die Ringöffnung des Anhydrids unter Addition der quaternisierbaren Stickstoffverbindung über deren reaktive Sauerstoff oder Stickstoffgruppe (wie z.B. Hydroxylgruppe oder primäre oder sekundäre Amingruppe) und ohne die Abspaltung von Kondensationswasser. Das dabei anfallende Reaktionsprodukt umfasst eine Polycarbonsäure-Zwischenprodukt, mit wenigstens einer neugebildeten Säureamidgruppe bzw. Estergruppe und wenigstens einer intramolekularen, gebundenen, neu gebildeten Carbonsäure- bzw. Carboxylatgruppe, in stöchiometrischem Anteil zu der durch die Additionsreaktion intramolekular gebundenen quaternisierbaren Aminogruppe.

Das so gebildete Reaktionsprodukt kann theoretisch weiter aufgereinigt oder das Lösungsmittel entfernt werden. Gewöhnlich ist dies aber nicht zwingend notwendig, so dass das Reaktionsprodukt ohne weitere Aufreinigung in den nächsten Syntheseschritt, der Quaternisierung, überführt werden kann.

### b) Quaternisierung

Die Epoxid-basierte Quaternisierung gemäß Reaktionsschritt (b) wird nun in völliger Abkehr von bisher beschriebenen Methoden des Standes der Technik ohne Säurezusatz durchgeführt. Der durch Aminaddition gebildete Carboxylrest unterstützt dabei die Epoxid-Ringöffnung und damit die Quaternisierung der Aminogruppe. Das dabei anfallende Reaktionsprodukt weist somit kein freies Säureanion auf. Das Produkt ist dennoch aufgrund seiner Betain-Struktur ladungsneutral.

Zur Durchführung der Quaternisierung versetzt man das Reaktionsprodukt oder Reaktionsgemisch aus Stufe a) mit wenigstens einer Epoxidverbindung obiger Formel (II), insbesondere in den erforderlichen stöchiometrischen Mengen, um die gewünschte Quaternisierung zu erreichen. Pro Äquivalent an quaternisierbarem tertiären Stickstoffatom kann man z.B. 0,1 bis 1,5 Äquivalente, oder 0,5 bis 1,25 Äquivalente, an Quaternisierungsmittel einsetzen. Insbesondere werden aber etwa annähernd äquimolare Anteile des Epoxids eingesetzt, um eine tertiäre Amingruppe zu quaternisieren. Entsprechend höhere Einsatzmengen sind erforderlich, um eine sekundäre oder primäre Amingruppe zu quaternisieren.

Man arbeitet hierbei typischerweise bei Temperaturen im Bereich von 15 bis 90°C, insbesondere von 20 bis 80 oder 30 bis 70 °C. Die Reaktionsdauer kann dabei im Bereich von wenigen Minuten oder einigen Stunden, wie z.B. etwa 10 Minuten bis zu etwa 24 Stunden liegen. Der Umsetzung kann dabei bei etwa 0,1 bis 20 bar, wie z.B. 1 bis 10 oder 1,5 bis 3 bar Druck, insbesondere aber etwa bei Normaldruck erfolgen. Insbesondere ist eine Inertgas-Atmosphäre, wie z.B. Stickstoff, zweckmäßig.

Falls erforderlich können die Reaktanden in einem geeigneten inerten organischen aliphatischen oder aromatischen Lösungsmittel oder einem Gemisch davon, für die Epoxidierung vorgelegt werden, oder es ist noch eine ausreichender Anteil an Lösungsmittel aus Reaktionsschritt a) vorhanden. Typischen Beispiele sind z.B. Lösungsmittel der Solvesso Serie, Toluol oder Xylol. Gemäß einer weiteren besonderen Ausführungsform wird die Umsetzung aber in Abwesenheit von organischen Lösungsmittel, insbesondere protischen (organischen) Lösungsmitteln, durchgeführt.

"Protische Lösungsmittel" , welche erfindungsgemäß insbesondere keine Anwendung finden, sind insbesondere solche, mit einer Dielektrizitätskonstante von größer als 9. Derartige protische Lösungsmittel enthalten gewöhnlich wenigstens eine HO-Gruppe und können zudem wasserhaltig sein. Typische Beispiele sind z.B. Glycole und Glycolether sowie Alkohole, wie aliphatische, cyclisch-aliphatische, aromatische oder heterocyclische Alkohole.

### c) Aufarbeitung des Reaktionsgemisches

Das so gebildete Reaktionsendprodukt kann theoretisch weiter aufgereinigt oder das Lösungsmittel kann entfernt werden. Gewöhnlich ist dies aber nicht zwingend notwendig, so dass das Reaktionsprodukt ohne weitere Aufreinigung als Additiv, gegebenenfalls nach Abmischung mit weiteren Additivkomponenten (s. unten) einsetzbar ist, zumal ja auch keine korrosiv wirkenden, freien Protonensäuren im Reaktionsprodukt enthalten sind.

### d) Allgemeines Beispiel

Als nichtlimitierendes Beispiel für die Umsetzung einer Polyalkylensubstituierten Dicarbonsaäureanhydrid-Verbindung durch Amin-Addition bzw. Alkohol-Addition und anschließende Quaternisierung sei auf folgende beispielhafte Reaktionsschemata verwiesen, worin R₁ bis R₇, L₁ und L₂ obige Bedeutungen besitzen:

### Stufe 1: Herstellung des substituierten Dicarbonsäureanhydrids

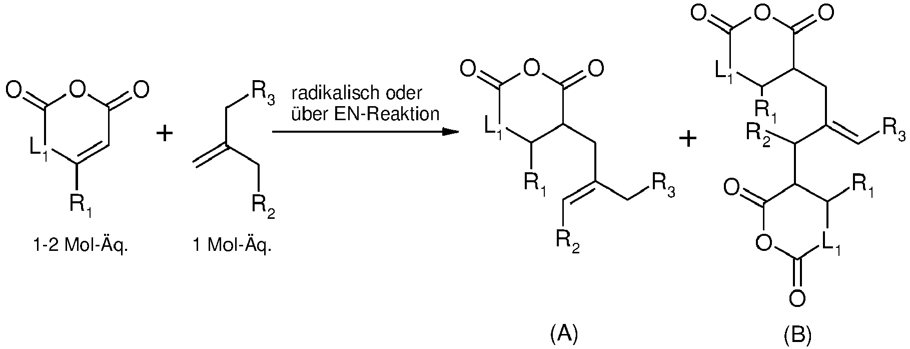

### Stufe 2a: Aminierung und Quaternisierung

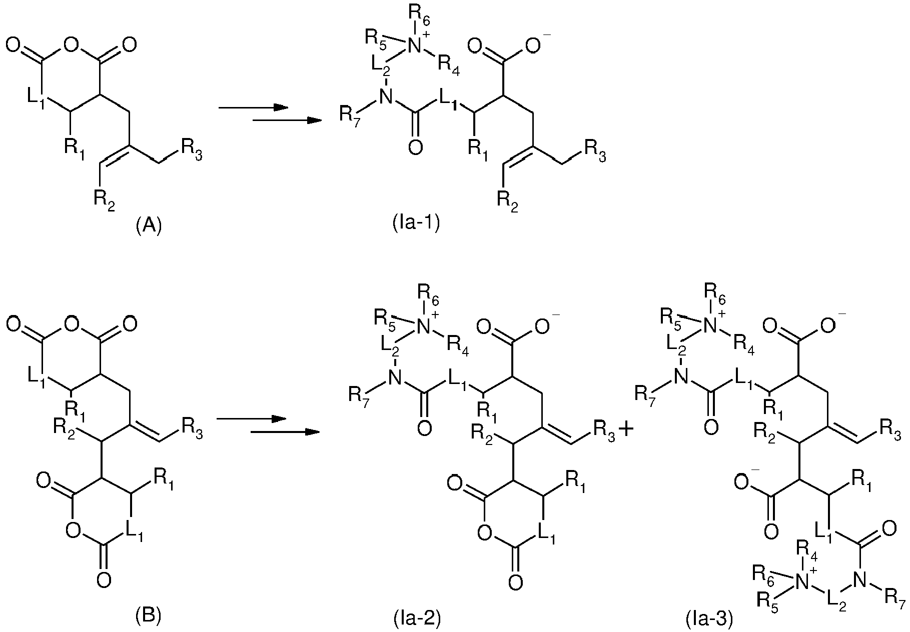

### Stufe 2b: Esterbildung und Quaternisierung

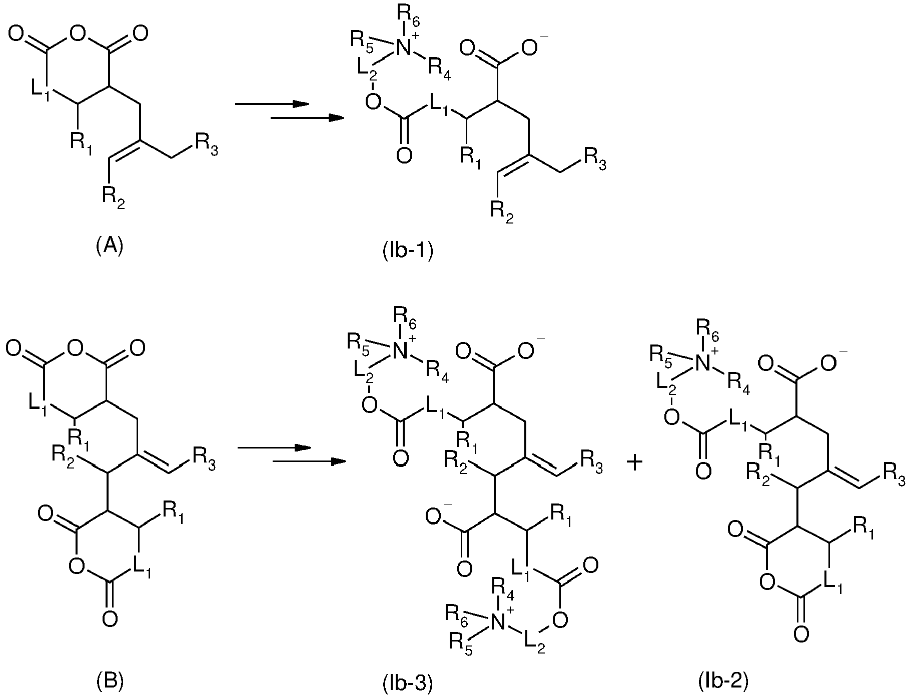

### B) Weitere Additivkomponenten

Der mit dem erfindungsgemäßen quaternisierten Additiv additivierte Kraftstoff ist ein Ottokraftstoff oder insbesondere ein Mitteldestillat-Kraftstoff, vor allem ein Dieselkraftstoff.

Der Kraftstoff kann weitere übliche Additive zur Wirksamkeitsverbesserung und/oder Verschleißunterdrückung enthalten.

Im Falle von Dieselkraftstoffen sind dies in erster Linie übliche Detergens-Additive, Trägeröle, Kaltfließverbesserer, Schmierfähigkeitsverbesserer (Lubricity Improver), Korrosionsinhibitoren, Demulgatoren, Dehazer, Antischaummittel, Cetanzahlverbesserer, Verbrennungsverbesserer, Antioxidantien oder Stabilisatoren, Antistatika, Metallocene, Metalldeaktivatoren, Farbstoffe und/oder Lösungsmittel.

Im Falle von Ottokraftstoffen sind dies vor allem Schmierfähigkeitsverbesserer (Friction Modifier), Korrosionsinhibitoren, Demulgatoren, Dehazer, Antischaummittel, Verbrennungsverbesserer, Antioxidantien oder Stabilisatoren, Antistatika, Metallocene, Metalldeaktivatoren, Farbstoffe und/oder Lösungsmittel.

Typische Beispiele geeigneter Co-Additive sind im folgenden Abschnitt aufgeführt:

### B1) Detergens-Additive

Vorzugsweise handelt es sich bei den üblichen Detergens-Additiven um amphiphile Substanzen, die mindestens einen hydrophoben Kohlenwasserstoffrest mit einem zahlengemittelten Molekulargewicht (Mₙ) von 85 bis 20.000 und mindestens eine polare Gruppierung besitzen, die ausgewählt ist unter:
(Da) Mono- oder Polyaminogruppen mit bis zu 6 Stickstoffatomen, wobei mindestens ein Stickstoffatom basische Eigenschaften hat;
(Db) Nitrogruppen, gegebenenfalls in Kombination mit Hydroxylgruppen;
(Dc) Hydroxylgruppen in Kombination mit Mono- oder Polyaminogruppen, wobei mindestens ein Stickstoffatom basische Eigenschaften hat;
(Dd) Carboxylgruppen oder deren Alkalimetall- oder Erdalkalimetallsalzen;
(De) Sulfonsäuregruppen oder deren Alkalimetall- oder Erdalkalimetallsalzen;
(Df) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(Dg) Carbonsäureestergruppen;
(Dh) aus Bernsteinsäureanhydrid abgeleiteten Gruppierungen mit Hydroxy- und/oder Amino- und/oder Amido- und/oder Imidogruppen; und/oder
(Di) durch Mannich-Umsetzung von substituierten Phenolen mit Aldehyden und Mono- oder Polyaminen erzeugten Gruppierungen.

Der hydrophobe Kohlenwasserstoffrest in den obigen Detergens-Additiven, welcher für die ausreichende Löslichkeit im Kraftstoff sorgt, hat ein zahlengemitteltes Molekulargewicht (Mₙ) von 85 bis 20.000, vorzugsweise von 113 bis 10.000, besonders bevorzugt von 300 bis 5.000, stärker bevorzugt von 300 bis 3.000, noch stärker bevorzugt von 500 bis 2.500 und insbesondere von 700 bis 2.500, vor allem von 800 bis 1500. Als typischer hydrophober Kohlenwasserstoffrest, insbesondere in Verbindung mit den polaren Gruppierungen kommen insbesondere Polypropenyl-, Polybutenyl- und Polyisobutenylreste mit einem zahlenmittleren Molekulargewicht Mₙ von vorzugsweise jeweils 300 bis 5.000, besonders bevorzugt 300 bis 3.000, stärker bevorzugt 500 bis 2.500 noch stärker bevorzugt 700 bis 2.500 und insbesondere 800 bis 1.500 in Betracht.

Als Beispiele für obige Gruppen von Detergens-Additiven seien die folgenden genannt:
Mono- oder Polyaminogruppen (Da) enthaltende Additive sind vorzugsweise Polyalkenmono- oder Polyalkenpolyamine auf Basis von Polypropen oder von hochreaktivem (d.h. mit überwiegend endständigen Doppelbindungen) oder konventionellem (d.h. mit überwiegend mittenständigen Doppelbindungen) Polybuten oder Polyisobuten mit Mₙ = 300 bis 5000, besonders bevorzugt 500 bis 2500 und insbesondere 700 bis 2500. Derartige Additive auf Basis von hochreaktivem Polyisobuten, welche aus dem Polyisobuten, das bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder die oben genannten Polyamine, eingesetzt werden. Entsprechende Additive auf Basis von Polypropen sind insbesondere in der WO-A 94/24231 beschrieben.

Weitere besondere Monoaminogruppen (Da) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in der WO-A 97/03946 beschrieben sind.

Weitere besondere Monoaminogruppen (Da) enthaltende Additive sind die aus Polyisobutenepoxiden durch Umsetzung mit Aminen und nachfolgender Dehydratisierung und Reduktion der Aminoalkohole erhältlichen Verbindungen, wie sie insbesondere in der DE-A 196 20 262 beschrieben sind.

Nitrogruppen (Db), gegebenenfalls in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in der WO-A96/03367 und in der WO-A 96/03479 beschrieben sind. Diese Umsetzungsprodukte stellen in der Regel Mischungen aus reinen Nitropolyisobutenen (z. B. α ,β -Dinitropolyisobuten) und gemischten Hydroxynitropolyisobutenen (z. B. α -Nitro-β -hydroxypolyisobuten) dar.

Hydroxylgruppen in Kombination mit Mono- oder Polyaminogruppen (Dc) enthaltende Additive sind insbesondere Umsetzungsprodukte von Polyisobutenepoxiden, erhältlich aus vorzugsweise überwiegend endständige Doppelbindungen aufweisendem Polyisobuten mit Mₙ = 300 bis 5000 mit Ammoniak, Mono- oder Polyaminen, wie sie insbeson-dere in der EP-A 476 485 beschrieben sind.

Carboxylgruppen oder deren Alkalimetall- oder Erdalkalimetallsalze (Dd) enthaltende Additive sind vorzugsweise Copolymere von C₂- bis C₄₀-Olefinen mit Maleinsäureanhydrid mit einer Gesamt-Molmasse von 500 bis 20.000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)-butenaminen oder Polyetheraminen eingesetzt werden.

Sulfonsäuregruppen oder deren Alkalimetall- oder Erdalkalimetallsalze (De) enthaltende Additive sind vorzugsweise Alkalimetall- oder Erdalkalimetallsalze eines Sulfobernsteinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)butenaminen oder Polyetheraminen eingesetzt werden.

Polyoxy-C₂-C₄-alkylengruppierungen (Df) enthaltende Additive sind vorzugsweise Polyether oder Polyetheramine, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkylcyclohexanolen oder C₁- bis C₃₁-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (Dg) enthaltende Additive sind vorzugsweise Ester aus Mono-, Di- oder Tricarbonsäuren mit langkettigen Alkanolen oder Polyolen, insbesondere solche mit einer Mindestviskosität von 2 mm²/s bei 100 °C, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder insbesondere Imidogruppen (Dh) enthaltende Additive sind vorzugsweise entsprechende Derivate von Alkyl- oder Alkenyl-substituiertem Bernsteinsäureanhydrid und insbesondere die entsprechenden Derivate von Polyisobutenylbernsteinsäureanhydrid, welche durch Umsetzung von konventionellem oder hochreaktivem Polyisobuten mit Mₙ = vorzugsweise 300 bis 5000, besonders bevorzugt 300 bis 3000, stärker bevorzugt 500 bis 2500, noch stärker bevorzugt 700 bis 2500 und insbesondere 800 bis 1500, mit Maleinsäureanhydrid auf thermischem Weg in einer En-Reaktion oder über das chlorierte Polyisobuten erhältlich sind. Bei den Gruppierungen mit Hydroxy- und/oder Amino- und/oder Amido- und/oder Imidogruppen handelt es sich beispielsweise um Carbonsäuregruppen, Säureamide von Monoaminen, Säureamide von Di- oder Polyaminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Beim Vorliegen von Imidogruppierungen D(h) wird das weitere Detergens-Additiv im Sinne der vorliegenden Erfindung jedoch nur bis maximal 100 % der Gewichtsmenge an Verbindungen mit Betainstruktur eingesetzt. Derartige Kraftstoffadditive sind allgemein bekannt und beispielsweise in den Dokumenten (1) und (2) beschrieben. Bevorzugt handelt es sich um die Umsetzungsprodukte von Alkyl- oder Alkenyl-substituierten Bernsteinsäuren oder Derivaten davon mit Aminen und besonders bevorzugt um die Umsetzungsprodukte von Polyisobutenyl-substituierten Bernsteinsäuren oder Derivaten davon mit Aminen. Von besonderem Interesse sind hierbei Umsetzungsprodukte mit aliphatischen Polyaminen (Polyalkylenimine) wie insbesondere Ethylendiamin, Diethylentriamin, Triethylentetramin, Tetraethylenpentamin, Pentaethylenhexamin und Hexaethylenheptamin, welche eine Imidstruktur aufweisen.

Durch Mannich-Umsetzung von substituierten Phenolen mit Aldehyden und Mono- oder Polyaminen erzeugte Gruppierungen (Di) enthaltende Additive sind vorzugsweise Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin oder Dimethylaminopropylamin. Die Polyisobutenyl-substituierten Phenole können aus konventionellem oder hochreaktivem Polyisobuten mit Mₙ = 300 bis 5000 stammen. Derartige "Polyisobuten-Mannichbasen" sind insbesondere in der EP-A 831 141 beschrieben.

Dem Kraftstoff können ein oder mehrere der genannten Detergens-Additive in solch einer Menge zugegeben werden, dass die Dosierrate an diesen Detergens-Additiven vozugsweise 25 bis 2500 Gew.-ppm, insbesondere 75 bis 1500 Gew.-ppm, vor allem 150 bis 1000 Gew.-ppm, beträgt.

### B2) Trägeröle

Mitverwendete Trägeröle können mineralischer oder synthetischer Natur sein. Geeignete mineralische Trägeröle sind bei der Erdölverarbeitung anfallende Fraktionen, wie Brightstock oder Grundöle mit Viskositäten wie beispielsweise aus der Klasse SN 500 bis 2000, aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500 °C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für geeignete synthetische Trägeröle sind Polyolefine (Polyalphaolefine oder Polyinternalolefine), (Poly)ester, Poly)alkoxylate, Polyether, aliphatische Polyetheramine, alkylphenolgestartete Polyether, alkylphenolgestartete Polyetheramine und Carbonsäureester langkettiger Alkanole.

Beispiele für geeignete Polyolefine sind Olefinpolymerisate mit Mₙ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-C₂- bis C₄-alkylengruppierungen enthaltende Verbindungen, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkyl-cyclohexanolen oder C₁- bis C₃₀-Alkylphenolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und der US-A 4,877,416 beschrieben. Beispielsweise können als Polyetheramine Poly-C₂- bis C₆-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 Kohlenstoffatomen. Typische Vertreter der Ester sind Adipate, Phthalate, iso-Phthalate, Terephthalate und Trimellitate des Isooctanols, Isononanols, Isodecanols und des Iso-tridecanols, z. B. Di-(n- oder Isotridecyl)phthalat.

Weitere geeignete Trägerölsysteme sind beispielsweise in der DE-A 38 26 608, DE-A 41 42 241, DE-A 43 09 074, EP-A 452 328 und der EP-A 548 617 beschrieben.

Beispiele für besonders geeignete synthetische Trägeröle sind alkoholgestartete Polyether mit etwa 5 bis 35, vorzugsweise etwa 5 bis 30, besonders bevorzugt 10 bis 30 und insbesondere 15 bis 30 C₃- bis C₆-Alkylenoxideinheiten, z. B. Propylenoxid-, n-Butylenoxid- und Isobutylenoxid-Einheiten oder Gemischen davon, pro Alkoholmolekül. Nichtlimitierende Beispiele für geeignete Starteralkohole sind langkettige Alkanole oder mit langkettigem Alkyl-substituierte Phenole, wobei der langkettige Alkylrest insbesondere für einen geradkettigen oder verzweigten C₆- bis C₁₈-Alkylrest steht. Als besondere Beispiele sind zu nennen Tridecanol und Nonylphenol. Besonders bevorzugte alkoholgestartete Polyether sind die Umsetzungsprodukte (Polyveretherungsprodukte) von einwertigen aliphatischen C₆- bis C₁₈-Alkoholen mit C₃- bis C₆-Alkylenoxiden. Beispiele für einwertige aliphatische C₆-C₁₈-Alkohole sind Hexanol, Heptanol, Octanol, 2-Ethylhexanol, Nonylalkohol, Decanol, 3-Propylheptanol, Undecanol, Dodecanol, Tridecanol, Tetradecanol, Pentadecanol, Hexadecanol, Octadecanol und deren Konstitutions- und Stellungsisomere. Die Alkohole können sowohl in Form der reinen Isomere als auch in Form technischer Gemische eingesetzt werden. Ein besonders bevorzugter Alkohol ist Tridecanol. Beispiele für C₃- bis C₆-Alkylenoxide sind Propylenoxid, wie 1,2-Propylenoxid, Butylenoxid, wie 1,2-Butylenoxid, 2,3-Butylenoxid, Isobutylenoxid oder Tetrahydrofuran, Pentylenoxid und Hexylenoxid. Besonders bevorzugt sind hierunter C₃- bis C₄-Alkylenoxide, d.h. Propylenoxid wie 1,2-Propylenoxid und Butylenoxid wie 1,2-Butylenoxid, 2,3-Butylenoxid und Isobutylenoxid. Speziell verwendet man Butylenoxid.

Weitere geeignete synthetische Trägeröle sind alkoxylierte Alkylphenole, wie sie in der DE-A 10 102 913 beschrieben sind.

Besondere Trägeröle sind synthetische Trägeröle, wobei die zuvor beschriebenen alkoholgestarteten Polyether besonders bevorzugt sind.

Das Trägeröl bzw. das Gemisch verschiedener Trägeröle wird dem Kraftstoff in einer Menge von vorzugsweise 1 bis 1000 Gew.-ppm, besonders bevorzugt von 10 bis 500 Gew.-ppm und insbesondere von 20 bis 100 Gew.-ppm zugesetzt.

### B3) Kaltfließverbesserer

Geeignete Kaltfließverbesserer sind im Prinzip alle organischen Verbindungen, welche in der Lage sind, das Fließverhalten von Mitteldestillat-Kraftstoffen bzw. Dieselkraftstoffen in der Kälte zu verbessern. Zweckmäßigerweise müssen sie eine ausreichende Öllöslichkeit aufweisen. Insbesondere kommen hierfür die üblicherweise bei Mitteldestillaten aus fossilem Ursprung, also bei üblichen mineralischen Dieselkraftstoffen, eingesetzten Kaltfließverbesserer (" middle distillate flow improvers" , " MDFI") in Betracht. Jedoch können auch organische Verbindungen verwendet werden, die beim Einsatz in üblichen Dieselkraftstoffen zum Teil oder überwiegend die Eigenschaften eines Wax Anti-Settling Additivs (" WASA") aufweisen. Auch können sie zum Teil oder überwiegend als Nukleatoren wirken. Es können aber auch Mischungen aus als MDFI wirksamen und/oder als WASA wirksamen und/oder als Nukleatoren wirksamen organischen Verbindungen eingesetzt werden.

Typischerweise wird der Kaltfließverbesserer ausgewählt aus:
(K1) Copolymeren eines C₂- bis C₄₀-Olefins mit wenigstens einem weiteren ethylenisch ungesättigten Monomer;
(K2) Kammpolymeren;
(K3) Polyoxyalkylenen;
(K4) polaren Stickstoffverbindungen;
(K5) Sulfocarbonsäuren oder Sulfonsäuren oder deren Derivaten; und
(K6) Poly(meth)acrylsäureestern.

Es können sowohl Mischungen verschiedener Vertreter aus einer der jeweiligen Klassen (K1) bis (K6) als auch Mischungen von Vertretern aus verschiedenen Klassen (K1) bis (K6) eingesetzt werden.

Geeignete C₂- bis C₄₀-Olefin-Monomere für die Copolymeren der Klasse (K1) sind beispielsweise solche mit 2 bis 20, insbesondere 2 bis10 Kohlenstoffatomen sowie mit 1 bis 3, vorzugsweise mit 1 oder 2, insbesondere mit einer Kohlenstoff-Kohlenstoff-Doppelbindung. Im zuletzt genannten Fall kann die Kohlenstoff-Kohlenstoff-Doppelbindung sowohl terminal (α-Olefine) als auch intern angeordnet sein kann. Bevorzugt sind jedoch α-Olefine, besonders bevorzugt α-Olefine mit 2 bis 6 Kohlenstoffatomen, beispielsweise Propen, 1-Buten, 1-Penten, 1-Hexen und vor allem Ethylen.

Bei den Copolymeren der Klasse (K1) ist das wenigstens eine weitere ethylenisch ungesättigte Monomer vorzugsweise ausgewählt unter Carbonsäurealkenylestern, (Meth)Acrylsäureestern und weiteren Olefinen.

Werden weitere Olefine mit einpolymerisiert, sind dies vorzugsweise höhermolekulare als das oben genannte C₂- bis C₄₀-Olefin-Basismonomere. Setzt man beispielsweise als Olefin-Basismonomer Ethylen oder Propen ein, eignen sich als weitere Olefine insbesondere C₁₀ bis C₄₀-α -Olefine. Weitere Olefine werden in den meisten Fällen nur dann mit einpolymerisiert, wenn auch Monomere mit Carbonsäureester-Funktionen eingesetzt werden.

Geeignete (Meth)Acrylsäureester sind beispielsweise Ester der (Meth)Acrylsäure mit C₁- bis C₂₀-Alkanolen, insbesondere C₁- bis C₁₀-Alkanolen, vor allem mit Methanol, Ethanol, Propanol, Isopropanol, n-Butanol, sec.-Butanol, Isobutanol, tert.-Butanol, Pentanol, Hexanol, Heptanol, Octanol, 2-Ethylhexanol, Nonanol und Decanol sowie Strukturisomeren hiervon.

Geeignete Carbonsäurealkenylester sind beispielsweise C₂- bis C₁₄-Alkenylester, z.B. die Vinyl- und Propenylester, von Carbonsäuren mit 2 bis 21 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der α-Position zur Carboxylgruppe befindet, wobei das α-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Carbonsäurealkenylester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenyl-ester, wobei die Vinylester bevorzugt sind. Ein besonders bevorzugter Carbonsäurealkenylester ist Vinylacetat; typische hieraus resultierende Copolymere der Gruppe (K1) sind die mit am häufigsten eingesetzten Ethylen-Vinylacetat-Copolymere ("EVA").
Besonders vorteilhaft einsetzbare Ethylen-Vinylacetat-Copolymere und ihre Herstellung sind in der WO 99/29748 beschrieben.

Als Copolymere der Klasse (K1) sind auch solche geeignet, die zwei oder mehrere voneinander verschiedene Carbonsäurealkenylester einpolymerisiert enthalten, wobei diese sich in der Alkenylfunktion und/oder in der Carbonsäuregruppe unterscheiden. Ebenfalls geeignet sind Copolymere, die neben dem/den Carbonsäurealkenylester(n) wenigstens ein Olefin und/oder wenigstens ein (Meth)Acrylsäureester einpolymerisiert enthalten.

Auch Terpolymere aus einem C₂- bis C₄₀-α -Olefin, einem C₁- bis C₂₀-Alkylester einer ethylenisch ungesättigten Monocarbonsäure mit 3 bis 15 Kohlenstoffatomen und einem C₂- bis C₁₄-Alkenylester einer gesättigten Monocarbonsäure mit 2 bis 21 Kohlenstoffatomen sind als Copolymere der Klasse (K1) geeignet. Derartige Terpolymere sind in der WO 2005/054314 beschrieben. Ein typisches derartiges Terpolymer ist aus Ethylen, Acrylsäure-2-ethylhexylester und Vinylacetat aufgebaut.

Das wenigstens eine oder die weiteren ethylenisch ungesättigten Monomeren sind in den Copolymeren der Klasse (K1) in einer Menge von vorzugsweise 1 bis 50 Gew.-%, insbesondere von 10 bis 45 Gew.-% und vor allem von 20 bis 40 Gew.-%, bezogen auf das Gesamtcopolymer, einpolymerisiert. Der gewichtsmäßige Hauptanteil der Monomereinheiten in den Copolymeren der Klasse (K1) stammt somit in der Regel aus den C₂- bis C₄₀-Basis-Olefinen.

Die Copolymere der Klasse (K1) weisen vorzugsweise ein zahlenmittleres Molekulargewicht Mₙ von 1000 bis 20.000, besonders bevorzugt von 1000 bis 10.000 und insbesondere von 1000 bis 8000 auf.

Typische Kammpolymere der Komponente (K2) sind beispielsweise durch die Copolymerisation von Maleinsäureanhydrid oder Fumarsäure mit einem anderen ethylenisch ungesättigten Monomer, beispielsweise mit einem α -Olefin oder einem ungesättigten Ester wie Vinylacetat, und anschließende Veresterung der Anhydrid- bzw. Säurefunktion mit einem Alkohol mit wenigstens 10 Kohlenstoffatomen erhältlich. Weitere geeignete Kammpolymere sind Copolymere von α -Olefinen und veresterten Comonomeren, beispielsweise veresterte Copolymere von Styrol und Maleinsäureanhydrid oder veresterte Copolymere von Styrol und Fumarsäure. Geeignete Kammpolymere können auch Polyfumarate oder Polymaleinate sein. Außerdem sind Homo- und Copolymere von Vinylethern geeignete Kammpolymere. Als Komponente der Klasse (K2) geeignete Kammpolymere sind beispielsweise auch solche, die in der WO 2004/035715 und in " Comb-Like Polymers. Structure and Properties" , N. A. Plate und V. P. Shibaev, J. Poly. Sci. Macromolecular Revs. 8, Seiten 117 bis 253 (1974)" beschrieben sind. Auch Gemische von Kammpolymeren sind geeignet.

Als Komponente der Klasse (K3) geeignete Polyoxyalkylene sind beispielsweise Polyoxyalkylenester, Polyoxyalkylenether, gemischte Polyoxyalkylenesterether und Gemische davon. Bevorzugt enthalten diese Polyoxyalkylenverbindungen wenigstens eine, vorzugsweise wenigstens zwei lineare Alkylgruppen mit jeweils 10 bis 30 Kohlenstoffatomen und eine Polyoxyalkylengruppe mit einem zahlenmittleren Molekulargewicht von bis zu 5000. Derartige Polyoxyalkylenverbindungen sind beispielsweise in der EP-A 061 895 sowie in der US 4 491 455 beschrieben. Besondere Polyoxyalkylenverbindungen basieren auf Polyethylenglykolen und Polypropylenglykolen mit einem zahlenmittleren Molekulargewicht von 100 bis 5000. Weiterhin sind Polyoxyalkylenmono- und -diester von Fettsäuren mit 10 bis 30 Kohlenstoffatomen wie Stearinsäure oder Behensäure geeignet.

Als Komponente der Klasse (K4) geeignete polare Stickstoffverbindungen können sowohl ionischer als auch nicht ionischer Natur sein und besitzen vorzugsweise wenigstens einen, insbesondere wenigstens zwei Substituenten in Form eines tertiären Stickstoffatoms der allgemeinen Formel >NR⁷, worin R₇ für einen C₈- bis C₄₀-Kohlenwasserstoffrest steht. Die Stickstoffsubstituenten können auch quaternisiert, das heißt in kationischer Form, vorliegen. Beispiele für solche Stickstoffverbindungen sind Ammoniumsalze und/oder Amide, die durch die Umsetzung wenigstens eines mit wenigstens einem Kohlenwasserstoffrest substituierten Amins mit einer Carbonsäure mit 1 bis 4 Carboxylgruppen bzw. mit einem geeignetem Derivat davon erhältlich sind. Vorzugsweise enthalten die Amine wenigstens einen linearen C₈- bis C₄₀-Alkylrest. Zur Herstellung der genannten polaren Stickstoffverbindungen geeignete primäre Amine sind beispielsweise Octylamin, Nonylamin, Decylamin, Undecylamin, Dodecylamin, Tetradecylamin und die höheren linearen Homologen, hierzu geeignete sekundäre Amine sind beispielsweise Dioctadecylamin und Methylbehenylamin. Geeignet sind hierzu auch Amingemische, insbesondere großtechnisch zugängliche Amingemische wie Fettamine oder hydrierte Tallamine, wie sie beispielsweise in Ullmanns Encyclopedia of Industrial Chemistry, 6. Auflage, im Kapitel " Amines, aliphatic" beschrieben werden. Für die Umsetzung geeignete Säuren sind beispielsweise Cyclohexan-1,2-dicarbonsäure, Cyclohexen-1,2-dicarbonsäure, Cyclopentan-1,2-dicarbonsäure, Naphthalindicarbonsäure, Phthalsäure, Isophthalsäure, Terephthalsäure und mit langkettigen Kohlenwasserstoffresten substituierte Bernsteinsäuren.

Insbesondere ist die Komponente der Klasse (K4) ein öllösliches Umsetzungsprodukt aus mindestens eine tertiäre Aminogruppe aufweisenden Poly(C₂- bis C₂₀-Carbon-säuren) mit primären oder sekundären Aminen. Die diesem Umsetzungsprodukt zugrundeliegenden mindestens eine tertiäre Aminogruppe aufweisenden Poly(C₂- bis C₂₀-Carbonsäuren) enthalten vorzugsweise mindestens 3 Carboxylgruppen, insbesondere 3 bis 12, vor allem 3 bis 5 Carboxylgruppen. Die Carbonsäure-Einheiten in den Polycarbonsäuren weisen vorzugsweise 2 bis 10 Kohlenstoffatome auf, insbesondere sind es Essigsäure-Einheiten. Die Carbonsäure-Einheiten sind in geeigneter Weise zu den Polycarbonsäuren verknüpft, meist über ein oder mehrere Kohlenstoff- und/oder Stickstoffatome. Vorzugsweise sind sie an tertiäre Stickstoffatome angebunden, die im Falle mehrerer Stickstoffatome über Kohlenwasserstoffketten verbunden sind.

Vorzugsweise ist die Komponente der Klasse (K4) ein öllösliches Umsetzungsprodukt auf Basis von mindestens eine tertiäre Aminogruppe aufweisenden Poly(C₂- bis C₂₀-Carbonsäuren) der allgemeinen Formel IIa oder IIb 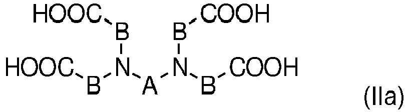 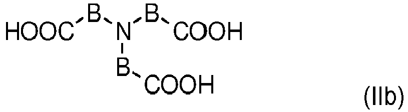 in denen die Variable A eine geradkettige oder verzweigte C₂- bis C₆-Alkylengruppe oder die Gruppierung der Formel III 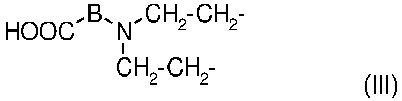 darstellt und die Variable B eine C₁- bis C₁₉-Alkylengruppe bezeichnet. Die Verbindungen der allgemeinen Formel IIa und IIb weisen insbesondere die Eigenschaften eines WASA auf.

Weiterhin ist das bevorzugte öllösliche Umsetzungsprodukt der Komponente (K4), insbesondere das der allgemeinen Formel IIa oder IIb, ein Amid, ein Amidammoniumsalz oder ein Ammoniumsalz, in dem keine, eine oder mehrere Carbonsäuregruppen in Amidgruppen übergeführt sind.

Geradkettige oder verzweigte C₂- bis C₆-Alkylengruppen der Variablen A sind beispielsweise 1,1-Ethylen, 1,2-Propylen, 1,3-Propylen, 1,2-Butylen, 1,3-Butylen, 1,4-Butylen, 2-Methyl-1,3-propylen, 1,5-Pentylen, 2-Methyl-1,4-butylen, 2,2-Dimethyl-1,3-propylen, 1,6-Hexylen (Hexamethylen) und insbesondere 1,2-Ethylen. Vorzugsweise umfasst die Variable A 2 bis 4, insbesondere 2 oder 3 Kohlenstoffatome.

C₁- bis C₁₉-Alkylengruppen der Variablen B sind vor beispielsweise 1,2-Ethylen, 1,3-Propylen, 1,4-Butylen, Hexamethylen, Octamethylen, Decamethylen, Dodecamethylen, Tetradecamethylen, Hexadecamethylen, Octadecamethylen, Nonadecamethylen und insbesondere Methylen. Vorzugsweise umfasst die Variable B 1 bis 10, insbesondere 1 bis 4 Kohlenstoffatome.

Die primären und sekundären Amine als Umsetzungspartner für die Polycarbonsäuren zur Bildung der Komponente (K4) sind üblicherweise Monoamine, insbesondere aliphatische Monoamine. Diese primären und sekundären Amine können aus einer Vielzahl von Aminen ausgewählt sein, die - gegebenenfalls miteinander verbundene - Kohlenwasserstoffreste tragen.

Meist sind diese den öllöslichen Umsetzungsprodukten der Komponente (K4) zugrundeliegenden Amine sekundären Amine und weisen die allgemeine Formel HN(R⁸)₂ auf, in der die beiden Variablen R⁸ unabhängig voneinander jeweils geradkettige oder verzweigte C₁₀- bis C₃₀-Alkylreste, insbesondere C₁₄- bis C₂₄-Alkylreste bedeuten. Diese längerkettigen Alkylreste sind vorzugsweise geradkettig oder nur in geringem Grade verzweigt. In der Regel leiten sich die genannten sekundären Amine hinsichtlich ihrer längerkettigen Alkylreste von natürlich vorkommenden Fettsäure bzw. von deren Derivaten ab. Vorzugsweise sind die beiden Reste R⁸ gleich.

Die genannten sekundären Amine können mittels Amidstrukturen oder in Form der Ammoniumsalze an die Polycarbonsäuren gebunden sein, auch kann nur ein Teil als Amidstrukturen und ein anderer Teil als Ammoniumsalze vorliegen. Vorzugsweise liegen nur wenige oder keine freien Säuregruppen vor. Vorzugsweise liegen die öllöslichen Umsetzungsprodukte der Komponente (K4) vollständig in Form der Amidstrukturen vor.

Typische Beispiele für derartige Komponenten (K4) sind Umsetzungsprodukte der Nitrilotriessigsäure, der Ethylendiamintetraessigsäure oder der Propylen-1,2-diamintetraessigsäure mit jeweils 0,5 bis 1,5 Mol pro Carboxylgruppe, insbesondere 0,8 bis 1,2 Mol pro Carboxylgruppe, Dioleylamin, Dipalmitinamin, Dikokosfettamin, Distearylamin, Dibehenylamin oder insbesondere Ditalgfettamin. Eine besonders bevorzugte Komponente (K4) ist das Umsetzungsprodukt aus 1 Mol Ethylendiamintetraessigsäure und 4 Mol hydriertem Ditalgfettamin.

Als weitere typische Beispiele für die Komponente (K4) seien die N,N-Dialkylammoniumsalze von 2-N' ,N' -Dialkylamidobenzoaten, beispielsweise das Reaktionsprodukt aus 1 Mol Phthalsäureanhydrid und 2 Mol Ditalgfettamin, wobei letzteres hydriert oder nicht hydriert sein kann, und das Reaktionsprodukt von 1 Mol eines Alkenylspirobislactons mit 2 Mol eines Dialkylamins, beispielsweise Ditalgfettamin und/oder Talgfettamin, wobei die beiden letzteren hydriert oder nicht hydriert sein können, genannt.

Weitere typische Strukturtypen für die Komponente der Klasse (K4) sind cyclische Verbindungen mit tertiären Aminogruppen oder Kondensate langkettiger primärer oder sekundärer Amine mit carbonsäurehaltigen Polymeren, wie sie in der WO 93/18115 beschrieben sind.

Als Kaltfließverbesserer der Komponente der Klasse (K5) geeignete Sulfocarbonsäuren, Sulfonsäuren oder deren Derivate sind beispielsweise die öllöslichen Carbonsäureamide und Carbonsäureester von ortho-Sulfobenzoesäure, in denen die Sulfonsäurefunktion als Sulfonat mit alkylsubstituierten Ammoniumkationen vorliegt, wie sie in der EP-A 261 957 beschrieben werden.

Als Kaltfließverbesserer der Komponente der Klasse (K6) geeignete Poly(meth)acrylsäureester sind sowohl Homo- als auch Copolymere von Acryl- und Methacrylsäureestern. Bevorzugt sind Copolymere von wenigstens zwei voneinander verschiedenen (Meth)Acrylsäureestern, die sich bezüglich des einkondensierten Alkohols unterscheiden. Gegebenenfalls enthält das Copolymer noch ein weiteres, davon verschiedenes olefinisch ungesättigtes Monomer einpolymerisiert. Das gewichtsmittlere Molekulargewicht des Polymers beträgt vorzugsweise 50.000 bis 500.000. Ein besonders bevorzugtes Polymer ist ein Copolymer von Methacrylsäure und Methacrylsäureestern von gesättigten C₁₄- und C₁₅-Alkoholen, wobei die Säuregruppen mit hydriertem Tallamin neutralisiert sind. Geeignete Poly(meth)acrylsäureester sind beispielsweise in der WO 00/44857 beschrieben.

Dem Mitteldestillat-Kraftstoff bzw. Dieselkraftstoff wird der Kaltfließverbesserer bzw. das Gemisch verschiedener Kaltfließverbesserer in einer Gesamtmenge von vorzugsweise 10 bis 5000 Gew.-ppm, besonders bevorzugt von 20 bis 2000 Gew.-ppm, stärker bevorzugt von 50 bis 1000 Gew.-ppm und insbesondere von 100 bis 700 Gew.-ppm, z.B. von 200 bis 500 Gew.-ppm, zugegeben.

### B4) Schmierfähigkeitsverbesserer

Geeignete Schmierfähigkeitsverbesserer (Lubricity Improver bzw. Friction Modifier) basieren üblicherweise auf Fettsäuren oder Fettsäureestern. Typische Beispiele sind Tallölfettsäure, wie beispielsweise in der WO 98/004656 beschrieben, und Glycerinmonooleat. Auch die in der US 6 743 266 B2 beschriebenen Reaktionsprodukte aus natürlichen oder synthetischen Ölen, beispielsweise Triglyceriden, und Alkanolaminen sind als solche Schmierfähigkeitsverbesserer geeignet.

### B5) Korrosionsinhibitoren

Geeignete Korrosionsinhibitoren sind z.B. Bernsteinsäureester, vor allem mit Polyolen, Fettsäurederivate, z.B. Ölsäureester, oligomerisierte Fettsäuren, substituierte Ethanolamine und Produkte, die unter dem Handelsnamen RC 4801 (Rhein Chemie Mannheim, Deutschland) oder HiTEC 536 (Ethyl Corporation) vertrieben werden.

### B6) Demulgatoren

Geeignete Demulgatoren sind z.B. die Alkali- oder Erdalkalisalze von Alkyl-substituierten Phenol- und Naphthalinsulfonaten und die Alkali- oder Erdalkalisalze von Fettsäuren, außerdem neutrale Verbindungen wie Alkoholalkoxylate, z.B. Alkoholethoxylate, Phenolalkoxylate, z.B. tert-Butylphenolethoxylat oder tert-Pentylphenolethoxylat, Fettsäuren, Alkylphenole, Kondensationsprodunkte von Ethylenoxid (EO) und Propylenoxid (PO), z.B. auch in Form von EO/PO-Blockcopolymeren, Polyethylenimine oder auch Polysiloxane.

### B7) Dehazer

Geeignete Dehazer sind z.B. alkoxylierte Phenol-Formaldehyd-Kondensate, wie beispielsweise die unter dem Handelsnamen erhältlichen Produkte NALCO 7D07 (Nalco) und TOLAD 2683 (Petrolite).

### B8) Antischaummittel

Geeignete Antischaummittel sind z.B. Polyether-modifizierte Polysiloxane, wie beispielsweise die unter dem Handelsnamen erhältlichen Produkte TEGOPREN 5851 (Goldschmidt), Q 25907 (Dow Corning) und RHODOSIL (Rhone Poulenc).

### B9) Cetanzahlverbesserer

Geeignete Cetanzahlverbesserer sind z.B. aliphatische Nitrate wie 2-Ethylhexylnitrat und Cyclohexylnitrat sowie Peroxide wie Di-tert-butylperoxid.

### B10) Antioxidantien

Geeignete Antioxidantien sind z.B. substituierte Phenole, wie 2,6-Di-tert.-butylphenol und 6-Di-tert.-butyl-3-methylphenol sowie Phenylendiamine wie N,N'-Di-sec.-butyl-p-phenylendiamin.

### B11) Metalldeaktivatoren

Geeignete Metalldeaktivatoren sind z.B. Salicylsäurederivate wie N,N'-Disalicyliden-1,2-propandiamin.

### B12) Lösungsmittel

Geeignete sind z.B. unpolare organische Lösungsmittel wie aromatische und aliphatische Kohlenwasserstoffe, beispielsweise Toluol, Xylole, "white spirit" und Produkte, die unter dem Handelsnamen SHELLSOL (Royal Dutch/Shell Group) und EXXSOL (ExxonMobil) vertrieben werden, sowie polare organische Lösungsmittel, beispielsweise Alkohole wie 2-Ethylhexanol, Decanol und Isotridecanol. Derartige Lösungsmittel gelangen meist zusammen mit den vorgenannten Additiven und Co-Additiven, die sie zur besseren Handhabung lösen oder verdünnen sollen, in den Dieselkraftstoff.

### C) Kraftstoffe

Das erfindungsgemäße Additiv eignet sich in hervorragender Weise als Kraftstoffzusatz und kann im Prinzip in jeglichen Kraftstoffen eingesetzt werden. Es bewirkt eine ganze Reihe von vorteilhaften Effekten beim Betrieb von Verbrennungsmotoren mit Kraftstoffen. Bevorzugt wird das erfindungsgemäße quaternisierte Additiv in Mitteldestillat-Kraftstoffen, insbesondere Dieselkraftstoffen, eingesetzt.

Gegenstand der vorliegenden Erfindung sind daher auch Kraftstoffe, insbesondere Mitteldestillat-Kraftstoffe, mit einem als Zusatzstoff zur Erzielung von vorteilhaften Effekten beim Betrieb von Verbrennungsmotoren, beispielsweise von Dieselmotoren, insbesondere von direkteinspritzenden Dieselmotoren, vor allem von Dieselmotoren mit Common-Rail-Einspritzsystemen, wirksamen Gehalt an dem erfindungsgemäßen quaternisierten Additiv. Dieser wirksame Gehalt (Dosierrate) liegt in der Regel bei 10 bis 5000 Gew.-ppm, vorzugsweise bei 20 bis 1500 Gew.-ppm, insbesondere bei 25 bis 1000 Gew.-ppm, vor allem bei 30 bis 750 Gew.-ppm, jeweils bezogen auf die Gesamtmenge an Kraftstoff.

Bei Mitteldestillat-Kraftstoffen wie Dieselkraftstoffen oder Heizölen handelt es sich vorzugsweise um Erdölraffinate, die üblicherweise einen Siedebereich von 100 bis 400°C haben. Dies sind meist Destillate mit einem 95%-Punkt bis zu 360°C oder auch darüber hinaus. Dies können aber auch so genannte "Ultra Low Sulfur Diesel" oder "City Diesel" sein, gekennzeichnet durch einen 95%-Punkt von beispielsweise maximal 345°C und einem Schwefelgehalt von maximal 0,005 Gew.-% oder durch einen 95%-Punkt von beispielsweise 285°C und einem Schwefelgehalt von maximal 0,001 Gew.-%. Neben den durch Raffination erhältlichen mineralischen Mitteldestillat-Kraftstoffen bzw. Dieselkraftstoffen sind auch solche, die durch Kohlevergasung oder Gasverflüssigung ["gas to liquid" (GTL)-Kraftstoffe] oder durch Biomasse-Verflüssigung ["biomass to liquid" (BTL)-Kraftstoffe] erhältlich sind, geeignet. Geeignet sind auch Mischungen der vorstehend genannten Mitteldestillat-Kraftstoffe bzw. Dieselkraftstoffe mit regenerativen Kraftstoffen, wie Biodiesel oder Bioethanol.

Die Qualitäten der Heizöle und Dieselkraftstoffe sind beispielsweise in DIN 51603 und EN 590 näher festgelegt (vgl. auch Ullmann' s Encyclopedia of Industrial Chemistry, 5. Auflage, Band A12, S. 617 ff.).

Das erfindungsgemäße quaternisierte Additiv kann neben seiner Verwendung in den oben genannten Mitteldestillat-Kraftstoffen aus fossilem, pflanzlichem oder tierischem Ursprung, die im wesentlichen Kohlenwasserstoffmischungen darstellen, auch in Mischungen aus solchen Mitteldestillaten mit Biobrennstoffölen (Biodiesel) eingesetzt werden. Derartige Mischungen werden im Sinne der vorliegenden Erfindung auch von dem Begriff " Mitteldestillat-Kraftstoff' umfasst. Sie sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden üblicherweise Niedrigalkylester, insbesondere C₁- bis C₄-Alkylester, verstanden, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise Sonnenblumenmethylester, Palmölmethylester ("PME"), Sojaölmethylester ("SME") und insbesondere Rapsölmethylester ("RME").

Besonders bevorzugt handelt es sich bei den Mitteldestillat-Kraftstoffen bzw. Dieselkraftstoffen um solche mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel.

Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 mögliche Einsatzgebiete für die vorliegende Erfindung.

Das erfindungsgemäße quaternisierte Additiv eignet sich insbesondere als Kraftstoffzusatz in Kraftstoffzusammensetzungen, insbesondere in Dieselkraftstoffen, zur Überwindung der eingangs geschilderten Probleme bei direkteinspritzenden Dieselmotoren, vor allem bei solchen mit Common-Rail-Einspritzsystemen.

Die Erfindung wird nun anhand der folgenden Ausführungsbeispiele näher beschrieben:

### Experimenteller Teil:

### A. Allgemeine Testmethoden

### a) Bestimmung des Amid- bzw. Imid-Gehalts durch IR-Spektroskopie

Das Vorliegen von Amid bzw. Imid in einer Probe wird IR-spektrometrisch überprüft. Die charakteristische IR-Bande für Amid liegt bei 1667 ± 5 cm⁻¹, während die charakteristische IR-Bande des Imids bei 1705 ± 5 cm⁻¹ liegt.

Die Proben wurden dazu in Solvesso 50%-ig (m/m) verdünnt und in einer 29 µ m-CaF2-Küvette vermessen.

### b) Motorentest

### b1) XUD9 Test - Bestimmung der Flow Restriction

Die Durchführung erfolgt nach den Standardbestimmungen gemäß CEC F-23-1-01.

### b2) DW10 Test - Bestimmung des Leistungsverlusts durch Injektorablagerungen im Common Rail Dieselmotor

Zur Untersuchung des Einflusses der Additive auf die Performance von direkteinspritzenden Dieselmotoren wurde der Leistungsverlust (powerloss) in Anlehnung an die offizielle Testmethode CEC F-098-08 bestimmt. Der Leistungsverlust ist ein direktes Maß für Bildung von Ablagerungen in den Injektoren.

Verwendet wurde ein direkteinspritzender Dieselmotor mit Common-Rail-System gemäß Testmethoden CEC F-098-08. Als Kraftstoff wurde ein handelsüblicher Dieselkraftstoff der Fa. Haltermann (RF-06-03) eingesetzt. Diesem wurden zur künstlichen Anregung der Bildung von Ablagerungen an den Injektoren 1 Gew.-ppm Zink in Form einer Zink-Didodecanoatlösung zugesetzt. Die Ergebnisse veranschaulichen den relativen Leistungsverlust bei 4000 rpm gemessen während eines 12-stündigen Dauerbetriebs. Der Wert "t0" gibt dabei den Leistungsverlust normiert (100%) auf den Wert nach 10 Minuten an; der Wert "t1" gibt den Leistungsverlust normiert auf den Wert nach einer Stunde an.

### c) Kurzsedimentationstest (KS-Test) - Bestimmung der Wirkung als Kaltflleßverbesserer

Bei der Lagerung von Dieselkraftstoffen im Lager- bzw. Fahrzeugtank bei Temperaturen unterhalb des Cloud Points (CP) können sich ausgefallene Paraffine absetzen. Die sich dabei bildende paraffinreiche Bodenphase hat ein schlechteres Kälteverhalten, kann Filter von Fahrzeugen verstopfen und so zum Zusammenbruch der Fördermenge führen.

Mit dem KS - Test wird eine mögliche Sedimentation in Fahrzeugtanks simuliert und visuell ausgewertet. Von der im Test erhaltenen, mit Paraffinen angereicherten Dieselkraftstoffphase wird der CP und CFPP-Wert ermittelt. Der Vergleich dieser Werte mit denen des unsedimentierten Kraftstoffes gestattet Rückschlüsse auf das Kälteverhalten des Kraftstoffes. Dazu werden Delta CP oder Delta CFPP Werte bestimmt.

Bei dem Test wird der zu prüfende, gegebenenfalls additivierte Dieselkraftstoff (DK) für insgesamt 16 h bei - 13°C aufbereitet. Es erfolgt eine visuelle Beurteilung. Anschließend werden 80 Vol%-Oberphase des Kraftstoffs von oben her vorsichtig abgesaugt. Nach Erwärmen und Homogenisieren der verbliebenen 20%-Unterphase werden davon der Cloudpoint (CPKS) und der Cold Filter Plugging Point (CFPPKS) mit an sich bekannten Apparaturen bestimmt.

Zur Durchführung werden die benötigten Probenmengen zur Abtrennung von Schmutz, Kokerbestandteilen, Wasser oder sonstigen ungelösten Verunreinigungen über ein Faltenfilter (nach DIN EN 116) abfiltriert. Das Probengefäß (skalierter Messzylinder) wird mit 550 ml Probenflüssigkeit befüllt. Die Probe wird, sofern erforderlich, mit Additiv versetzt. In einem Wasserbad erfolgt eine Erwärmung auf 50°C. Das Probengefäß wird aus dem Wasserbad genommen und abgetrocknet. Durch Stürzen und Schütteln wird die Probe homogenisiert. Von Teilmengen werden die Ausgangswerte CP und CFPP ("Original") bestimmt. Durch Stehen an der Luft wird die Probentemperatur 25°C angenähert.

Das Probengefäß mit 500 ml Probeninhalt wird mittels Haltevorrichtung in ein Flüssigkeitsbad eingehängt. Temperierung beginnt bei 25°C. Die Probe wird innerhalb 2 h 40 min auf -13°C abgekühlt. Bei -13 °C wird die Probe 13 h 20 min gelagert.

Mittels einer Absaugvorrichtung wird die Probe bis auf eine Restmenge von 100 ml (20 %) von oben her abgesaugt. Probenbewegungen und Turbulenzen sind so gering wie möglich zu halten. Das Probengefäß wird mit der darin verbliebenen 20% Unterphase auf 50°C erwärmt. Die Unterphase wird homogenisiert und zur Bestimmung der Endwerte von CP und CFPP (d.h. CPKS und CFPPKS) verwendet.

### d) Nachweis der Betain-Struktur

Der Nachweis der Betain-Struktur in erfindungsgemäßen Additiven und deren Synthesevorstufen erfolgt durch Massenbestimmung unter Anwendung der **M**atrix **A**ssisted **L**aser **D**esorption/**I**onisation-**T**ime **O**f **F**light Mass Spectrometry (MALDI-TOF-MS). Die Analyse erfolgt unter folgenden Bedingungen:
Verwendet wird das Gerät BIFLEX 3 der Fa. Bruker und ein UV-Laser der Wellenlänge 337nm. Die Laserleistung wird solange erhöht, bis die Austrittsschwelle der Ionen erreicht ist. Die Matrix besteht aus 20 g/l Dithranol in THF (ionengetauscht), wobei eine Polymerkonzentration von ca. 2 g/l in THF verwendet wird. Die Vorgehensweise ist folgende: die Matrix wird mit dem jeweiligen Polymer im Verhältnis 1:1 gemischt und 1 µl davon auf dem Target getrocknet ("dried-droplet technique"). Die getrockneten Fraktionen werden dann in 20 µl der Matrix-Lösung gelöst und schließend vermessen. Insgesamt werden pro Messung 100 Einzelspektren addiert.

Außerdem wird auch die Analyse über ESI-LC/MS (Electrospray Ionisation Liquid Chromatographie Mass Spectrometry) im Lösungsmittel THF durchgeführt. Dafür wird das LTQ/FT (Thermo) MS-System und das LC-System bestehend aus HP 1100 Bin Pumpe, HP 1100 ALS und HP 1100 DAD verwendet. Es werden ca. 10 mg Prüfsubstanz in 1 ml THF gelöst und bei Raumtemperatur vermessen. Die Auflösung beträgt 100.000.

### e) Bestimmung der Motorenölverträgllchkelt von Dieselkraftstoffen (DK)

Die Bestimmung erfolgte nach den Vorschriften in dem von der Deutschen Wissenschaftlichen Gesellschaft für Erdöl, Erdgas und Kohle e.V. (DGMK) aufgestellten Kriterienkatalog zur Testung von Lubricity Additiven in Dieselkraftstoffen (DGMK-Report 531)

Im Kraftstoffsystem von Dieselfahrzeugen besteht die Möglichkeit, dass geringe Mengen an Motorenöl in den Dieselkraftstoffkreislauf gelangen. In einigen Fällen ist beobachtet worden, dass Reaktionen zwischen Motorenölbestandteilen und den in Dieselkraftstoffen enthaltenen Additiven auftraten, die zu Verstopfungen von Kraftstofffiltern und damit zum Ausfall von Fahrzeugen rührten. Deshalb wurde eine Prüfmethode entwickelt, mit deren Hilfe Reaktionen zwischen Motorenöl- und Dieselkraftstoffadditiven, die zu Filterverstopfungen führen würden, erkannt und beurteilt werden.

Das zu prüfende Additiv wird mit der gleichen Menge des festgelegten Motorenöls vermischt und über drei Tage bei 90 °C konditioniert. Nach dieser Konditionierung wird das Gemisch mit Dieselkraftstoff aufgefüllt, vermischt und mit Hilfe des SEDAB - Tests (DGMK Report 531, Anhang II-A) beurteilt. Die Ergebnisse aus beiden Prüfungen gestatten eine Aussage über die "Motorenölverträglichkeit" des zu prüfenden Dieselkraftstoffadditivs.

### Geräte und Prüfmittel:

- 500 ml Erlenmeyerkolben mit NS19 Glasschliffstopfen
- alpha-Methylnaphtalin
- Dieselkraftstoff, welcher den SEDAB-Test einwandfrei besteht
- Motorenöl (CEC Reference Lub RL-189, SAE 15W-40)

Der zur Durchführung des Tests vorgesehene DK sowie das Motorenöl sind vor ihrem ersten Einsatz mit Hilfe des SEDAB-Tests zu beurteilen. Hierzu werden 10 g Motorenöl in 500 ml DK gelöst. Eventuell sind zur Verbesserung der Löslichkeit 10 ml alpha-Methylnaphtalin zuzusetzen und die Homogenisierung zu wiederholen. Diese Mischung wird sofort im SEDAB-Test beurteilt. Ist die Mischung einwandfrei filtrierbar, so kann der DK für die Durchführung der Prüfung verwendet werden.

In einen 500 ml Erlenmeyerkolben werden je 10 g Motorenöl und 10 g des zu überprüfenden Additivs eingewogen und anschließend durch Schwenken des Kolbens homogenisiert. Bei schlechter Mischbarkeit werden zusätzlich 10 ml alpha-Methylnaphtalin zugesetzt und erneut homogenisiert. Diese Mischung wird mit einem Glasstopfen verschlossen und drei Tage bei einer Temperatur von 90 °C im Trockenschrank konditioniert.

Nach der Konditionierung lässt man die Mischung eine Stunde bei Raumtemperatur abkühlen und beurteilt sie visuell auf eventuelle Ausscheidungen, Trübungen, Gelbildungen u.s.w. Die Mischung wird mit Dieselkraftstoff auf 500 ml aufgefüllt und gut durchmischt. Es erfolgt eine visuelle Beurteilung. Sollten sich Ausscheidungen gebildet haben, so sind diese vor der Durchführung des SEDAB- Tests durch kräftiges Schütteln zu suspendieren. Nach zwei Stunden Standzeit wird die Mischung erneut visuell beurteilt und dann über ein 0,8 µm Filter bei einer Druckdifferenz von 800 mbar (siehe SEDAB-Prüfvorschrift) filtriert, Die Gesamtmenge muss innerhalb der festgelegten Zeit filtrierbar sein.

Beim Auftreten von Ausscheidungen, Trübungen, Gelbildungen und/oder schlechter Filtrierbarkeit im SEDAB- Test ist das Additiv als nicht motorenölverträglich einzustufen. Bei guter Filtrierbarkeit und einwandfreiem visuellen Befund ist das Additiv als motorenölverträglich einzustufen.

### Angaben zum SEDAB-Test:

500 ml eines vorbehandelten DKs werden dazu über ein Membranfilter gesaugt. Die Zeit in Sekunden, die gebraucht werden, um dieses Volumen bei 20±2 °C und 200 hPa (d.h. ca 800hPa Differenzdruck) zu filtrieren, wird bestimmt. Liegt diese über zwei Minuten, so wird die nach zwei Minuten erhaltene Filtratmenge notiert.

### Benötigte Geräte / Materialien

- Membranfilter: Fa. Sartorius aus Cellulosenitrat, weiß, glatt, 50 mm Durchmesser. Porenweite 0,8 µm.
- Filtrationsgerät: Filtrationseinrichtung mit 500 ml-Trichter: Sartorius SM 16 201
- Saugflasche: Fassungsvermögen 1000 ml
- Vakuumsystem: z.B. Vakuum-Constanter TOM-VAC 1 Automatic Zerosystem mit einem Mindestdruck von 200 hPa.
- Trockenschrank zum Temperieren bei 90±3 °C ohne Umluft
- Pinzette
- Petrischale aus Glas, ca. 125 mm Durchmesser mitannehmbarem Deckel
- Probengefäß: Standzylinder (Fassungsvermögen 500 ml) mit Glasschliff und Stopfen.

Zur Probenvorbereitung wird das Probengefäß der ursprünglichen Kraftstoffprobe mit 20 senkrechten Hüben geschüttelt. Man lässt die Probe 16 Stunden bei Raumtemperatur stehen. Unmittelbar vor der Messung wird der Kraftstoff nochmals durch Schütteln (10 Hübe) homogenisiert und in den 500-ml-Trichter der Prüfapparatur gegeben.

Die Membranfilter werden bei 90 ± 3 °C für eine halbe Stunde im Trockenschrank konditioniert und anschließend bis zu Verwendung in einem Exsikkator aufbewahrt. Der entsprechend vorbereitete Membranfilter wird in die Filtrationsapparatur eingelegt. Der 500 ml-Trichter wird mit der gesamten Probe (500 ml) befüllt und dann sofort ein Druck von 200 hPa (absolut, entspricht ca. 800 hPa Differenzdruck) angelegt. Es ist darauf zu achten, dass die Kraftstoffprobe nicht nachgegossen wird. Die Filtrationszeit wird auf volle Sekunden gerundet angegeben. Wird eine Filtrationszeit von zwei Minuten überschritten, ohne dass die gesamte Probe filtriert werden konnte, so wird die Prüfung beendet und das bis dahin durchgelaufene Volumen des Kraftstoffs gemessen. Die Angabe des Ergebnisses erfolgt in diesem Fall als "> 2 Minuten" und der bis zum Abbruch filtrierten Probenmenge (ml). Liegt die Filtrationszeit der Probe über zwei Minuten, sollte ein entsprechendes Muster für 30 Minuten auf 50 °C erwärmt und anschließend filtriert werden. Sofern das Messergebnis wiederum über zwei Minuten liegt, sollte die Gesamtverschmutzung des Kraftstoffs nach DIN 51 419 bestimmt werden.
Nach der Filtration werden Trichter und Filter mit n-Heptan und nachfolgend mit Testbenzin (40/80) DK-frei gespült. Das Membranfilter wird mit einer Pinzette vorsichtig von der Filterplatte entfernt, in eine saubere Petrischale gelegt und für 30 Minuten mit halbgeöffnetem Deckel in einem Trockenschrank bei 90 ± 3 °C getrocknet. Danach wird die Petrischale mindestens 15 Minuten zum Abkühlen in den Exsikkator gestellt.

Proben, die nach dem oben beschriebenen Verfahren innerhalb von zwei Minuten filtrierbar sind, werden bzgl. der vorliegenden Prüfmethode als "unkritisch" eingestuft. Dieselkraftstoffe, die innerhalb dieser Zeit nicht filtrierbar sind, sind als "kritisch" einzustufen und können bei Fahrzeugen und Tankstellen zu Filterverstopfungen führen. Bei Proben mit kritischem Verhalten sollte das Membranfilter optisch (mikroskopisch) bzw. mittels Infrarotspektroskopie auf die Ursache der Verstopfens untersucht werden.

### B. Herstellungs- und Analysenbeispiele:

### Verwendete Reaktanden:

| | |
|---|---|
| PIBSA: | Mw = 1100; Verseifungszahl = 85 mg KOH/g |
| DMAPA: | Mw = 102,18 |
| Styroloxid: | Mw = 120,15 |
| Essigsäure: | Mw = 60,05 |

### Herstellungsbeispiel 1: Synthese eines erfindungsgemäßen, säurefreien, quatemisierten Bemsteinsäureamids (PIBSA/DMAPA/Styroloxid; Amidierung bei 40 °C)

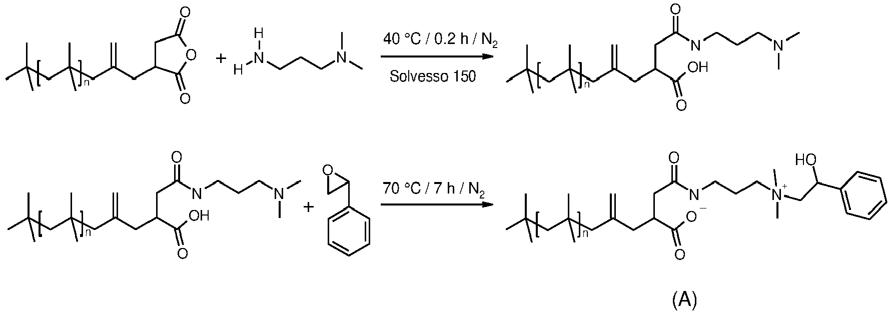

386.8 g (0,35 Mol) Polyisobutenbernsteinsäureanhydrid (PIBSA 1000) werden in einem 2 Liter Vierhalskolben bei Raumtemperatur unter einem schwachen N₂-Strom in 176 g *Solvesso 150* gelöst. Nach der Zugabe von 29.9 g (0,29 Mol) 3-Dimethylamino-1-propylamin (DMAPA) steigt die Reaktionstemperatur auf 40 °C an. Die Lösung wird 10 Minuten lang bei 40 °C gerührt. Anschließend werden 34.2 g (0,29 Mol) (1,2-Epoxyethyl)-benzol zugegeben und es folgt eine weitere Reaktionszeit von 7 Stunden bei 70 °C unter N₂. Die Lösung wird abschließend mit 274.9 g *Solvesso 150* auf einen Wirkstoffgehalt von 50 % eingestellt.

Durch IR-Analyse konnte die Bildung des erfindungsgemäßen Amid-Additionsproduktes (A) nachgewiesen werden.

Mittels ESI-LC/MS und MALDI-TOF-MS wurde die Betain-Struktur von (A) experimentell belegt.

### Herstellungsbeispiel 2 (Vergleich): Synthese eines säurehaltigen quaternisierten Bernsteinsäureimids (PIBSA/DMAPA/Styroloxid/Essigsäure) analog WO2006/135881

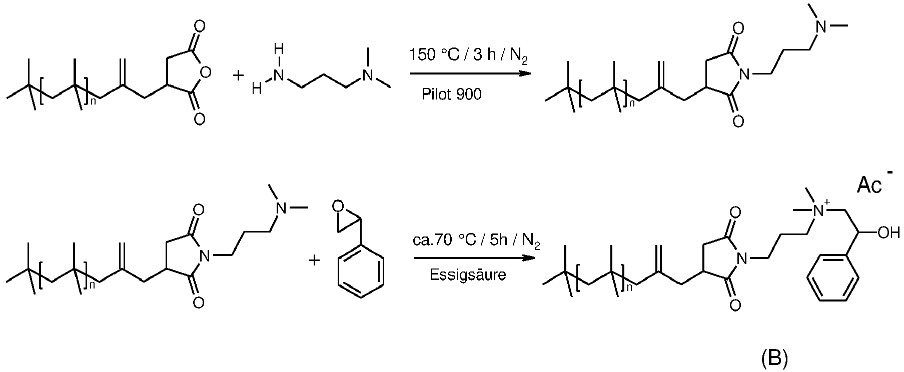

Die gesamte Versuchsdurchführung erfolgt unter schwachem N₂-Strom. PIBSA 1000 (481,61 g) und Pilot 900 Öl (84,99g) werden bei 110°C in der Vorlage gerührt. Dann wird DMAPA (37,28g) binnen 42 Minuten bei 110-115°C zudosiert. Man beobachtet eine leicht exotherme Reaktion. Anschließend wird auf 150°C hochgeheizt und 3h bei 150°C gerührt um Reaktionswasser zu entfernen. Der Ansatz wird dann auf Raumtemperatur gekühlt und nacheinander mit MeOH (152g), Essigsäure (21,91g) und Styroloxid (43,84g) versetzt. der Ansatz wird dann 5h am Rückfluss (67-69°C) gerührt. Nach Stehen über Nacht bei 30-35°C wird der Ansatz destillativ eingeengt (1h/ 6mbar / 36°C Ölbad). Die Auswaage von 661,1g wird mit Pilot900 Öl (493,07g) auf einen Wirkstoffgehalt von 50% eingestellt.

Durch IR-Analyse konnte die Bildung des Imids (B) nachgewiesen werden.

Mittels ESI-LC/MS und MALDI-TOF-MS wurde das Fehlen einer Betain-Struktur in (B) experimentell belegt.

### C. Anwendungsbeispiele:

In den folgenden Anwendungsbeispielen werden die Additive entweder als Reinsubstanz (so wie in obigen Herstellungsbeispielen synthetisiert) oder in Form eines Additiv-Paketes eingesetzt. Folgenden Pakete wurden verwendet

**M2450: Erfindungsgemäßes Additivpaket**

| Zusatz | Anteil (%) |
|---|---|
| Produkt gemäß Herst. Bsp.1 | 48,06 |
| Dehazer | 0,92 |
| Antischaum | 1,11 |
| Solvesso 150 | 25,88 |
| Pilot 900 | 24,03 |
| Summe | 100 |

**M2452: Vergleichs-Additivpaket**

| Zusatz | Anteil (%) |
|---|---|
| Produkt gemäß Herst. Bsp. 2 | 48,06 |
| Dehazer | 0,92 |
| Antischaum | 1,11 |
| Solvesso 150 | 49.91 |
| Summe | 100 |

### Anwendungsbeispiel 1: Bestimmung der Additivwirkung auf die Bildung von Ablagerungen in Dieselmotor-Einspritzdüsen

### a) XUD9 Tests

Verwendeter Kraftstoff: RF-06-03 (Referenzdiesel, Haltermann Products, Hamburg)

Die Ergebnisse sind in folgender Tabelle zusammengefasst

| Bsp. | Bezeichnung | Dosierung Wirkstoff [mg/kg] | Dosierung Wirkstoff im Kraftstoff [mg/kg] | Flow restriction 0,1 mm Nadelhub [%] |
|---|---|---|---|---|
| #1 | Blindwert | - | - | 61 |
| #2 | Additiv gemäß Herstellungsbeispiel 1 | 60 | 30 | 4.2 |

### b) DW10 Test

Die Versuchsergebnisse sind in Figur 1 dargestellt. Aufgetragen sind dabei die t0-Werte.

Dabei zeigt sich, dass bei gleicher Dosierung (100 mg/kg Wirkstoff, dh. 200 ppm Herstellungsbeispiel 1) das erfindungsgemäße Amid-Additiv (Rauten) und das Imid-Vergleichsadditiv (Dreiecke) den für unadditivierten Kraftstoff (Quadrate) beobachteten Leistungsverlust deutlich verringern, wobei jedoch das erfindungsgemäße Additiv den verbleibenden Leistungsverlust im Bereich von etwa 0,5% über die gesamte Versuchsdauer stabilisiert, d.h. 99.5 % der ursprünglichen Motor-Maximalleistung bleiben erhalten. Mit dem entsprechenden Vergleichsadditiv bleibt jedoch nur noch eine Leistung von 98,5% der ursprünglichen Motor-Maximalleistung erhalten.

### Anwendungsbeispiel 2: Bestimmung der Tieftemperatureigenschaften - Kurzsedimentationstest

Kommerziell erhältlicher Winter-DK wurde in der in folgender Tabelle angegebenen Weise mit Additiv gemäß Herstellngsbeispiel 1 (#3) und Additiv gemäß Herstellungsbeispiel 2 (#2), sowie mit dem Additivpaket M2450 (#5) bzw. M2452 (#4) additiviert und einem KS-Test unterzogen. Als Vergleich (#1) diente DK mit Kaltfliessverbessereradditiv ohne Amid und Imid.

Als Testkraftstoff wurde Dieselkraftstoff der Firma Bayernoil, (CP - 6,5°C) verwendet.

Sämtliche Kraftstoffproben (#1 bis #5) waren zudem mit handelsüblichem Mitteldestillat-kaltfließverbesserer (MDFI) und Wachs-Anti-Settling-Additiv (WASA) additiviert.

Den in folgender Tabelle zusammengefassten Testdaten ist zu entnehmen, dass die Delta CP und CFPPKS Werte der erfindungsgemäß additivierten DKs deutlich verbessert gegenüber den Imid-haltigen DKs sind. Mit der Amid-Additivierung kann somit das Kälteverhalten der DKs deutlich verbessert werden.

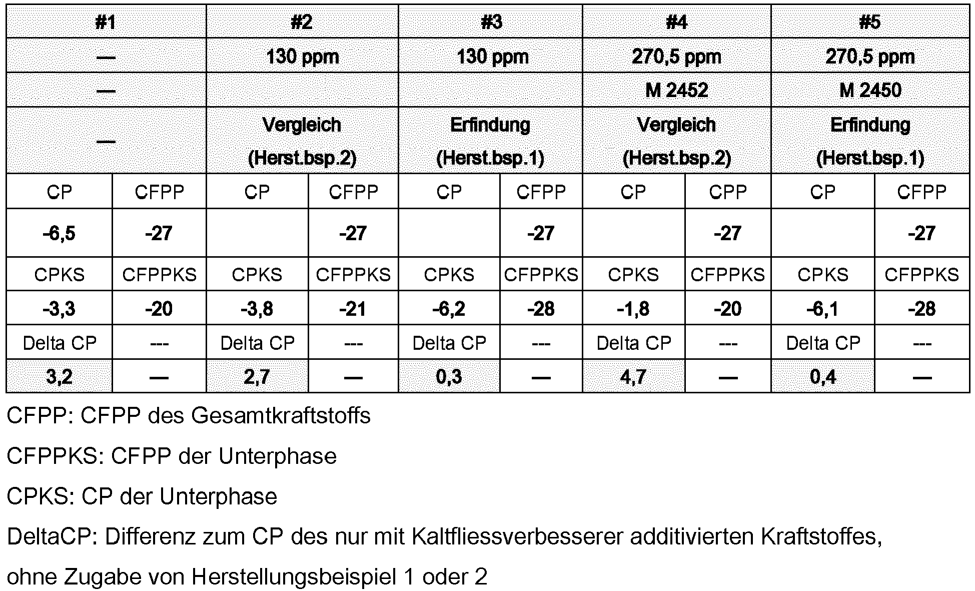

### Anwendungsbeispiel 3: Bestimmung der Motorölverträglichkeit

Die Bestimmung erfolgte nach den Vorgaben von DGMK-Report 531.
Verwendetes Motorenöl: Wintershall 14W40 Multi Record Top
Verwendeter Dieselkraftstoff (DK): RF-06-03 (Referenzdiesel, Haltermann Products, Hamburg)

Das zu prüfende Additiv wird mit der gleichen Menge Mineralöl (je 10g) vermischt, 3 Tage bei 90°C konditioniert und dabei visuell bewertet. Anschließend wird das Gemisch mit Dieselkraftstoff auf 500 ml aufgefüllt, vermischt und mit Hilfe des SEDAB-Filtrationstests (ebenfalls definiert in DGMK-Report 531) beurteilt.

Die Ergebnisse sind in folgender Tabelle zusammengefasst:

| Test # | Produkt^{a)} (aus Herstellungsbsp. X) | Visuell 72h/90°C | Löslichkeit in DK | Filtration |
|---|---|---|---|---|
| 1 | 2 (Vergleich) | fest (fail) | trüb, unlöslich | Fail |
| 2 | 1 (Erfindung) | flüssig (pass) | löslich | pass |

| | | | | |
|---|---|---|---|---|
| ^{a)}da beide Produkte synthesebedingt unterschiedliche Lösungsmitteltypen (Solvesso 150 bzw. Pilot 900) enthielten wurden diese vor Durchführung des Tests mit der gleichen Menge des jeweils anderen Lösungsmittels versetzt, so dass identischen Testbedingungen gegeben waren. | | | | |

### Anwendungsbeispiel 4: Bestimmung der Wirkung auf IDID

Die Bestimmung erfolgte in einem Personenkraftwagen-Betriebstest. Es wurde handelsüblicher Dieselkraftstoff (DK) EN590 (mit üblichen DK-Additiven additiviert) Das zu prüfende Additiv (erfindungsgemäßes Additiv gemäß Herstellungsbeispiel 1) wurde dem EN590 DK zugesetzt. Zum Vergleich dient handelsüblicher EN590 Kraftstoff, der nicht mit einem erfindungsgemäßen Additiv versetzt war. Nach Beeindingung des Motorentests werden die Injektoren auf Ablagerungen überprüft. Man beobachtet einen überraschend deutlichen positiven Effekt auf IDIDs.

### Durchführung des Tests:

Ein Personenkraftwagen mit Common Rail-Injektoren (Magnettyp) bei denen Injektorablagerungen festgestellt worden waren, wurde zur Evaluierung des Additivs zur Entfernung dieser inneren Injektorablagerungen verwendet.

Das Auftreten bräunlicher innerer Ablagerungen in den Injektoren wurde durch optische (visuelle) Inspektion der Armatur der Ansteuereinheit, der Ventilplatte vor der Armatur und der Ventilsitzfläche nachgewiesen und war außerdem über einen rauhen und geräuschvollen Motorlauf erkennbar. Den aus der ausgelesenen Daten konnte ebenfalls entnommen werden, dass die Menge des in den Zylinder injizierten Kraftstoffvolumens vom Normalwert deutlich abwich.

Der Motor wurde zunächst auf der Straße mit einer Tankfüllung von herkömmlich additiviertem Diesel ohne erfindungsgemäßes Additiv EN590 Grundkraftstoff (50 Liter, 750 km im Mischbetrieb auf Autobahnen, Landstraßen und Innenstadt) betrieben. Es war keine Verbesserung bei den inneren Ablagerungen zu beobachten, wenn das Fahrzeug mit einer Tankfüllung nicht-additivierten Kraftstoffes betrieben wurde (vgl. folgende Tabelle).

Im nächsten Schritt wurde der Tank mit dem gleichen EN590 Grundkraftstoff betrieben, der jedoch mit dem erfindungsgemäßen Additiv in einer Dosierung von 120 mg/kg aktives Material versetzt war. Der Wagen wurde erneut 750 km im Mischbetrieb gefahren. Die Ablagerungen waren nach diesem Testbetrieb mit additiviertem Kraftstoff nach 750 km deutlich verringert, wie bereits durch einen weicheren, weniger lauten Motorbetrieb feststellbar war. Auch die aus der Motorkontrolleinheit ausgelesenen Daten zeigten, dass die Mengen an eingespritztem Kraftstoff auf den Sollwert zurückgingen.

Nach zwei Tankfüllungen und Betrieb über 1500 km mit erfindungsgemäß additiviertem Kraftstoff waren die bräunlichen Injektorablagerungen aus der Armatur der Ansteuereinheit (solenoid coil face), der Ventilplatte vor der Armatur und der Ventilsitzfläche völlig verschwunden, wie nach dem Öffnen des Injektors visuell feststellbar war.

Diese Ergebnisse veranschaulichen eindeutig, dass das erfindungsgemäße Additiv innere Injektorablagerungen (IDIDs) bei niedriger Dosierung völlig entfernen konnte. Aus den Versuchsergebnissen kann ebenfalls gefolgert werden, dass das Additiv außerdem die Fähigkeit besitzt, die Bildung von IDIDs auch bei geringeren Dosierungsraten zu verhindern. Darüber hinaus wurde festgestellt, dass das erfindungemäße Additiv nicht nur wachs- oder seifenartige IDIDs sondern auch feste, kohlenstoffartige, polymere Ablagerungen zu beseitigen in der Lage ist.

**Tabelle**

| **Status** | **Test km gesamt** | **Test km mit additiviertem Kraftstoff** | **Motorlauf** | **Optische Inspektion (Solenoid Coil Face)** | **Daten aus ECU Unit** | **Ergebnis** |
|---|---|---|---|---|---|---|
| übliches Fahrzeug aus Feldbetrieb | 0 | 0 | rauh, laut | starke bräunliche Ablagerungen | injiziertes Kraftstoff-Volumen außerhalb Sollwert | starke Ablagerungen (Kohlenstoff-artig) |
| 1. Tankfüllung + Lauf mit nichtadditiviertem Kraftstoff (EN590 Grundkraftstoff) | 750 | 0 | rauh, laut | starke bräunliche Ablagerungen | injiziertes Kraftstoff-Volumen außerhalb Sollwert | keine Besserung, starke Ablagerungen (Kohlenstoff-artig) |
| 1. Tankfüllung + Lauf mit additiviertem Kraftstoff (Dosierung 120 mg/kg) | 1500 | 750 | weniger laut | verringerte Ablagerungen | injiziertes Kraftstoff-Volumen innerhalb Sollwert | verringerte Ablagerungen |
| 2. Tankfüllung + Lauf mit additiviertem Kraftstoff (Dosierung 120 mg/kg) | 2250 | 1500 | weich, ruhig | Ablagerungen völlig verschwunden | injiziertes Kraftstoff-Volumen innerhalb Sollwert | Ablagerungen völlig verschwunden |

Auf die Offenbarung der hierin zitierten Druckschriften wird ausdrücklich Bezug genommen.

Weitere Ausführungsformen:
1. Verfahren zur Herstellung quaternisierter Stickstoffverbindungen, wobei man
   a. an eine Polycarbonsäureanhydrid-Verbindung eine Verbindung, enthaltend wenigstens eine mit dem Anhydrid reaktive Sauerstoff- oder Stickstoff-haltige Gruppe und zusätzlich enthaltend wenigstens eine quaternisierbare Aminogruppe, addiert und
   b. das Produkt aus Stufe a) quaternisiert.
2. Verfahren nach Ausführungsform 1, wobei die Polycarbonsäureanhydrid-Verbindung ein Di-, Tri- oder Tetracarbonsäure-Anhydrid ist.
3. Verfahren nach einer der vorhergehenden Ausführungsformen, wobei die Polycarbonsäureanhydrid-Verbindung das Anhydrid einer C₄-C₁₀-Dicarbonsäure ist.
4. Verfahren nach einer der vorhergehenden Ausführungsformen, wobei die Polycarbonsäureanhydrid-Verbindung wenigstens einen Hydrocarbylsubstituenten mit einem zahlenmittleren Molekulargewicht (Mn) im Bereich von etwa 200 bis 10.000, insbesondere 350 bis 5.000, umfasst.
5. Verfahren nach einer der vorhergehenden Ausführungsformen, wobei die mit dem Anhydrid reaktive Verbindung ausgewählt ist unter
   a. Hydroxyalkyl-substituierten Mono- oder Polyaminen mit wenigstens einer quaternisierbaren, primären, sekundären oder tertiären Aminogruppe
   b. geradkettigen oder verzweigtem, cyclischen, heterocyclischen, aromatischen oder nichtaromatischen Polyaminen mit wenigstens einer primären oder sekundären Aminogruppe und mit wenigstens einer quaternisierbaren, primären, sekundären oder tertiären Aminogruppe;
   c. Piperazinen.
6. Verfahren nach Ausführungsform 5, wobei die mit dem Anhydrid reaktive Verbindung ausgewählt ist unter
   a. Hydroxyalkyl-substituierten primären, sekundären oder tertiären Monoaminen und Hydroxyalkyl-substituierten primären, sekundären oder tertiären Diaminen.
   b. geradkettigen oder verzweigten aliphatischen Diaminen mit zwei primären Aminogruppen; Di- oder Polyaminen mit wenigstens einer primären und wenigstens einer sekundären Aminogruppe; Di- oder Polyaminen mit wenigstens einer primären und wenigstens einer tertiären Aminogruppe; aromatischen carbo-cyclischen Diaminen mit zwei primären Aminogruppen; aromatischen heterocyclischen Polyaminen mit zwei primären Aminogruppen; aromatischen oder nichtaromatischen Heterozyklen mit einer primären und einer tertiären Aminogruppe.
7. Verfahren nach einer der vorhergehenden Ausführungsformen, wobei das Quaternisierungsmittel ausgewählt ist unter Epoxiden, insbesondere Hydrocarbylepoxiden.
8. Verfahren nach Ausführungsform 7, wobei die Quaternisierung ohne Zugabe eines H⁺-Donors, insbesondere ohne Zugabe von Säure erfolgt.
9. Verfahren nach einer der vorhergehenden Ausführungsformen, wobei man Stufe a) bei einer Temperatur von weniger als etwa 80 °C und insbesondere bei einer Temperatur im Bereich von etwa 30 bis 70 °C, vor allem 40 bis 60 °C, durchführt.
10. Verfahren nach einer der vorhergehenden Ausführungsformen, wobei man Stufe a) über einem Zeitraum von 1 bis 120 Minuten, insbesondere 10 bis 30 Minuten durchführt.
11. Verfahren nach einer der vorhergehenden Ausführungsformen, wobei man Stufe b) bei einer Temperatur im Bereich von 40 bis 80 °C durchführt.
12. Verfahren nach einer der vorhergehenden Ausführungsformen, wobei man Stufe b) über einen Zeitraum 1 bis 10 Stunden durch führt.
13. Verfahren nach einer der vorhergehenden Ausführungsformen, wobei man Stufe b) mit einem Hydrocarbylepoxid als Quaternisierungsmittel in Abwesenheit von freier Säure durchführt.
14. Verfahren nach einer der vorhergehenden Ausführungsformen, wobei die Umsetzung gemäß Stufe a) und/oder b) in Abwesenheit eines Lösungsmittels, insbesondere eines organischen protischen Lösungsmittels erfolgt.
15. Quaternisierte Stickstoffverbindung erhältlich nach einem Verfahren nach einer der vorhergehenden Ausführungsformen.
16. Quaternisierte Stickstoffverbindung nach Ausführungsform 15, umfassend wenigstens eine Verbindung der allgemeinen Formeln: 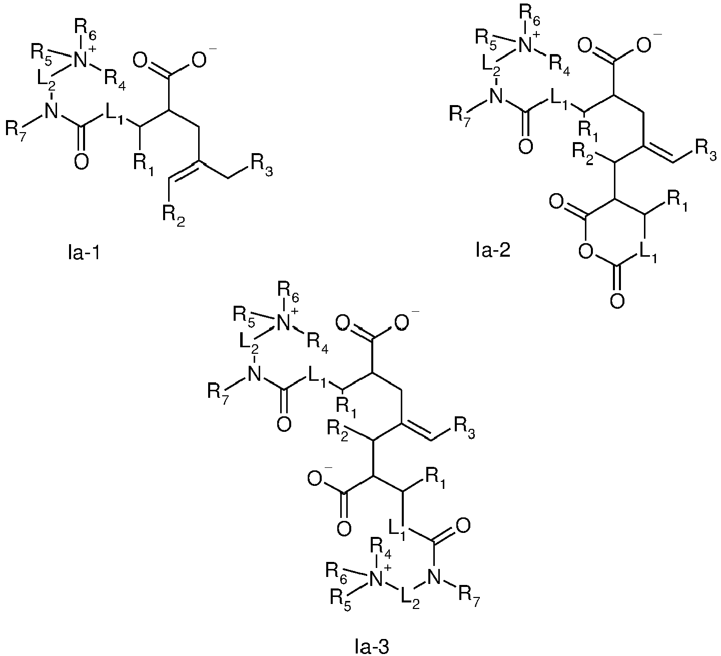 oder 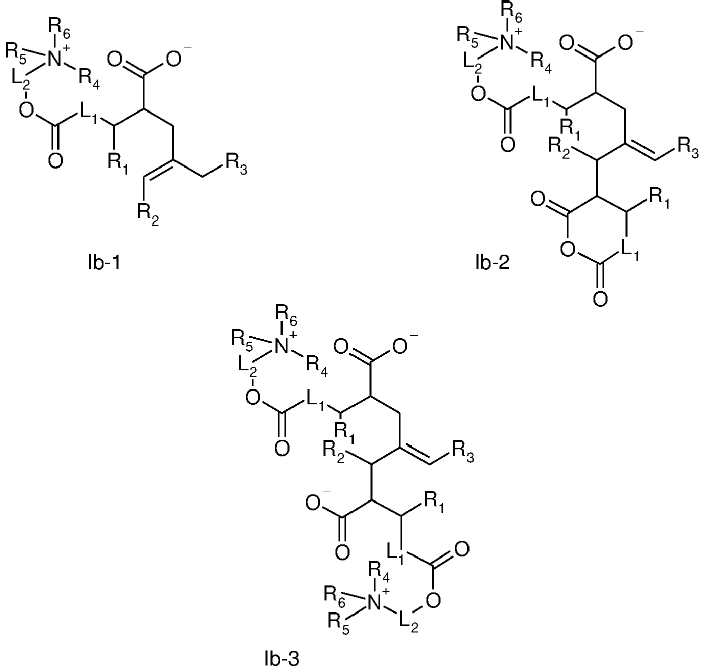
   worin R₁ für H oder geradkettigen oder verzweigten Hydrocarbyl-Rest steht, welcher gegebenenfalls ein- oder mehrfach substituiert sein kann mit Hydroxyl, Carboxyl, Hydrocarbyloxy-und/oder Acyl-Resten, oder ein oder mehrere Ethergruppen in der Hydrocarbylkette aufweist, und insbesondere für H oder kurzkettiges Hydrocarbyl, insbesondere Alkyl steht;
   R₂ für H oder Alkyl steht; R₃ für Hydrocarbyl, insbesondere langkettiges Hydrocarbyl, wie z.B. für einen Polyalkylenrest steht;
   wenigstens einer der Reste R₄, R₅ und R₆ ein durch Quaternisierung eingeführter Rest ist, insbesondere eine Hydrocarbylrest oder Hydroxyl-substituierter Hydrocarbylrest ist, und die übrigen Reste ausgewählt sind unter geradkettigen oder verzweigten, zyklischen Hydrocarbylresten, welche gegebenenfalls eine oder mehrfach substituiert sind und/oder ein oder mehrere Heteroatome aufweisen;
   R₇ für H oder einen geradkettigen oder verzweigten Hydrocarbyl-Rest steht, welcher gegebenenfalls ein- oder mehrfach substituiert sein kann mit Hydroxyl, Carboxyl, Hydrocarbyloxy-und/oder Acyl-Resten, oder ein oder mehrere Ethergruppen in der Hydrocarbylkette aufweist, oder R₇ zusammen mit einem der Reste R₄, R₅ und R₆ eine Brückengruppe bildet;
   L₁ für eine chemische Bindung oder eine geradkettige oder verzweigte Alkylengruppe steht und
   L₂ für eine geradkettige oder verzweigte Alkylengruppe steht, die gegebenenfalls ein oder mehrere Heteroatome oder Substituenten trägt.
17. Quaternisierte Stickstoffverbindung nach Ausführungsform 15 oder 16, welche im Wesentlichen H⁺-Donor-frei, insbesondere säurefrei ist, und vor allem keine anorganischen Säuren oder kurzkettigen organischen Säuren aufweist.
18. Verwendung einer quaternisierten Stickstoffverbindung nach einer der Ausführungsformen 15 bis 17 als Kraftstoffadditiv oder Schmierstoffadditiv.
19. Verwendung nach Ausführungsform 18, als Detergensadditiv für Dieselkraftstoffe.
20. Verwendung nach Ausführungsform 18, als Wachs-Anti-Settling Additiv (WASA) für Mitteldestillatbrennstoffe, insbesondere Dieselkraftstoffe.
21. Verwendung nach Ausführungsform 19, als Additiv zur Verringerung oder Vermeidung von Ablagerungen in Einspritzsystemen von direkteinspritzenden Dieselmotoren, insbesondere in Common-Rail-Einspritzsystemen, zur Verringerung des Kraftstoffverbrauches von direkteinspritzenden Dieselmotoren, insbesondere von Dieselmotoren mit Common-Rail-Einspritzsystemen, und/oder zur Minimierung des Leistungsverlustes (powerloss) in direkteinspritzenden Dieselmotoren, insbesondere in Dieselmotoren mit Common-Rail-Einspritzsystemen.
22. Verwendung nach Ausführungsform 21, als Additiv zur Kontrolle (Vermeidung oder Verringerung) vom Inneren Dieselinjektor-Ablagerungen (IDID).
23. Additivkonzentrat, enthaltend in Kombination mit weiteren Kraftstoffadditiven, insbesondere Dieselkraftstoffadditiven, wenigstens eine quaternisierte Stickstoffverbindung nach einer der Ausführungsformen 15 und 16.
24. Kraftstoffzusammensetzung, enthaltend in einer Hauptmenge eines übliches Grundkraftstoffs eine wirksame Menge wenigstens einer quaternisierten Stickstoffverbindung nach einer der Ausführungsformen 15 und 16.
25. Schmierstoffzusammensetzung, enthaltend in einer Hauptmenge eines übliches Schmierstoffs eine wirksame Menge wenigstens einer quaternisierten Stickstoffverbindung nach einer der Ausführungsformen 15 und 16.

## Patentansprüche

1. Verwendung einer quaternisierte Stickstoffverbindung, erhältlich nach einem Verfahren, wobei man
a) an eine Polycarbonsäureanhydrid-Verbindung eine Verbindung, enthaltend wenigstens eine mit dem Anhydrid reaktive Sauerstoff- oder Stickstoff-haltige Gruppe und zusätzlich enthaltend wenigstens eine quaternisierbare Aminogruppe, addiert und
b) das Produkt aus Stufe a) quaternisiert;
als Ottokraftstoff-Additiv.

2. Verwendung nach Anspruch 1, wobei die Polycarbonsäureanhydrid-Verbindung ein Di-, Tri- oder Tetracarbonsäure-Anhydrid ist.

3. Verwendung nach einem der vorhergehenden Ansprüche, wobei die Polycarbonsäureanhydrid-Verbindung das Anhydrid einer C₄-C₁₀-Dicarbonsäure ist.

4. Verwendung nach einem der vorhergehenden Ansprüche, wobei die Polycarbonsäureanhydrid-Verbindung wenigstens einen Hydrocarbylsubstituenten mit einem zahlenmittleren Molekulargewicht (Mn) im Bereich von etwa 200 bis 10.000, insbesondere 350 bis 5.000, umfasst.

5. Verwendung nach einem der vorhergehenden Ansprüche, wobei die mit dem Anhydrid reaktive Verbindung ausgewählt ist unter
a) Hydroxyalkyl-substituierten Mono- oder Polyaminen mit wenigstens einer quaternisierbaren, primären, sekundären oder tertiären Aminogruppe
b) geradkettigen oder verzweigtem, cyclischen, heterocyclischen, aromatischen oder nichtaromatischen Polyaminen mit wenigstens einer primären oder sekundären Aminogruppe und mit wenigstens einer quaternisierbaren, primären, sekundären oder tertiären Aminogruppe;
c) Piperazinen.

6. Verwendung nach Anspruch 5, wobei die mit dem Anhydrid reaktive Verbindung ausgewählt ist unter
a) Hydroxyalkyl-substituierten primären, sekundären oder tertiären Monoaminen und Hydroxyalkyl-substituierten primären, sekundären oder tertiären Diaminen.
b) geradkettigen oder verzweigten aliphatischen Diaminen mit zwei primären Aminogruppen; Di- oder Polyaminen mit wenigstens einer primären und wenigstens einer sekundären Aminogruppe; Di- oder Polyaminen mit wenigstens einer primären und wenigstens einer tertiären Aminogruppe; aromatischen carbo-cyclischen Diaminen mit zwei primären Aminogruppen; aromatischen heterocyclischen Polyaminen mit zwei primären Aminogruppen; aromatischen oder nichtaromatischen Heterozyklen mit einer primären und einer tertiären Aminogruppe.

7. Verwendung nach einem der vorhergehenden Ansprüche, wobei das Quaternisierungsmittel ausgewählt ist unter Epoxiden, insbesondere Hydrocarbylepoxiden.

8. Verwendung nach Anspruch 7, wobei die Quaternisierung ohne Zugabe eines H⁺-Donors, insbesondere ohne Zugabe von Säure erfolgt.

9. Verwendung nach einem der vorhergehenden Ansprüche, wobei man Stufe a) bei einer Temperatur von weniger als etwa 80 °C und insbesondere bei einer Temperatur im Bereich von etwa 30 bis 70 °C, vor allem 40 bis 60 °C, durchführt.

10. Verwendung nach einem der vorhergehenden Ansprüche, wobei man Stufe a) über einem Zeitraum von 1 bis 120 Minuten, insbesondere 10 bis 30 Minuten durchführt.

11. Verwendung nach einem der vorhergehenden Ansprüche, wobei man Stufe b) bei einer Temperatur im Bereich von 40 bis 80 °C durchführt.

12. Verwendung nach einem der vorhergehenden Ansprüche, wobei man Stufe b) über einen Zeitraum 1 bis 10 Stunden durch führt.

13. Verwendung nach einem der vorhergehenden Ansprüche, wobei man Stufe b) mit einem Hydrocarbylepoxid als Quaternisierungsmittel in Abwesenheit von freier Säure durchführt.

14. Verwendung nach einem der vorhergehenden Ansprüche, wobei die Umsetzung gemäß Stufe a) und/oder b) in Abwesenheit eines Lösungsmittels, insbesondere eines organischen protischen Lösungsmittels erfolgt.

15. Verwendung nach einem der vorhergehenden Ansprüche, wobei quaternisierte Stickstoffverbindung wenigstens eine Verbindung der allgemeinen Formeln umfasst: 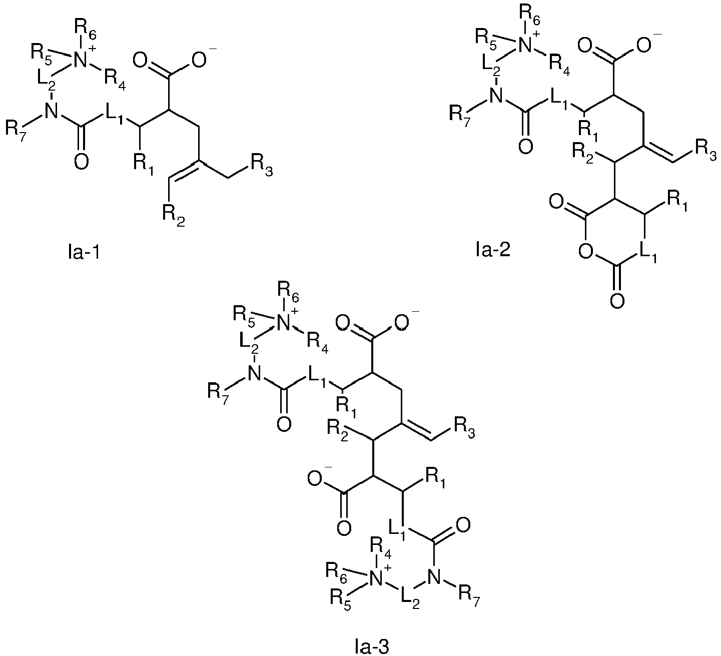 oder 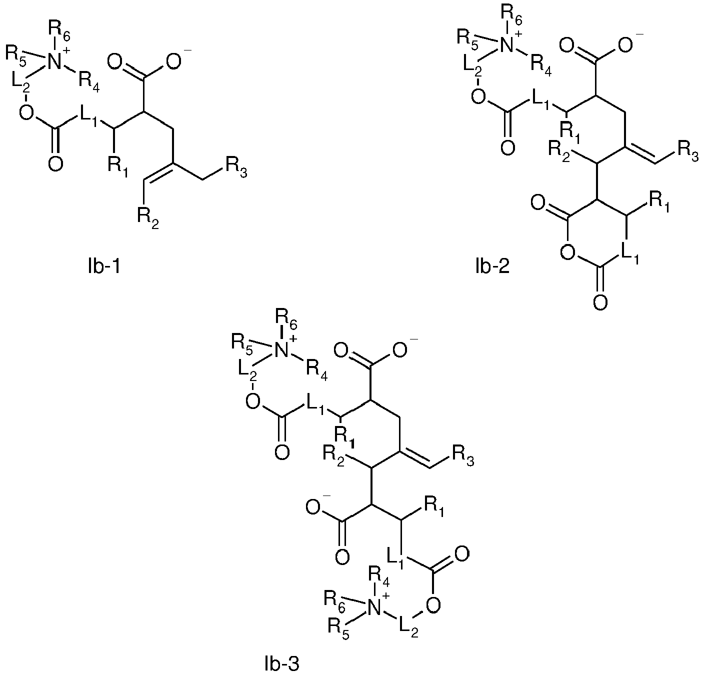
worin R₁ für H oder geradkettigen oder verzweigten Hydrocarbyl-Rest steht, welcher gegebenenfalls ein- oder mehrfach substituiert sein kann mit Hydroxyl, Carboxyl, Hydrocarbyloxy-und/oder Acyl-Resten, oder ein oder mehrere Ethergruppen in der Hydrocarbylkette aufweist, und insbesondere für H oder kurzkettiges Hydrocarbyl, insbesondere Alkyl steht;
R₂ für H oder Alkyl steht; R₃ für Hydrocarbyl, insbesondere langkettiges Hydrocarbyl, wie z.B. für einen Polyalkylenrest steht;
wenigstens einer der Reste R₄, R₅ und R₆ ein durch Quaternisierung eingeführter Rest ist, insbesondere eine Hydrocarbylrest oder Hydroxyl-substituierter Hydrocarbylrest ist, und die übrigen Reste ausgewählt sind unter geradkettigen oder verzweigten, zyklischen Hydrocarbylresten, welche gegebenenfalls eine oder mehrfach substituiert sind und/oder ein oder mehrere Heteroatome aufweisen;
R₇ für H oder einen geradkettigen oder verzweigten Hydrocarbyl-Rest steht, welcher gegebenenfalls ein- oder mehrfach substituiert sein kann mit Hydroxyl, Carboxyl, Hydrocarbyloxy-und/oder Acyl-Resten, oder ein oder mehrere Ethergruppen in der Hydrocarbylkette aufweist, oder R₇ zusammen mit einem der Reste R₄, R₅ und R₆ eine Brückengruppe bildet;
L₁ für eine chemische Bindung oder eine geradkettige oder verzweigte Alkylengruppe steht und
L₂ für eine geradkettige oder verzweigte Alkylengruppe steht, die gegebenenfalls ein oder mehrere Heteroatome oder Substituenten trägt.

16. Verwendung nach Anspruch 15, wobei die quaternisierte Stickstoffverbindung im Wesentlichen H⁺-Donor-frei, insbesondere säurefrei ist, und vor allem keine anorganischen Säuren oder kurzkettigen organischen Säuren aufweist.

17. Ottokraftstoffzusammensetzung, enthaltend in einer Hauptmenge eines übliches Grundkraftstoffs eine wirksame Menge wenigstens einer quaternisierten Stickstoffverbindung nach Anspruch 15.
